Europäisches Patentamt

European Patent Office

Office européen des brevets

(19)

(11) Veröffentlichungsnummer: **0 303 869 B1**

# EUROPÄISCHE PATENTSCHRIFT

(45) Veröffentlichungstag der Patentschrift: **01.07.92**

(51) Int. Cl.⁵: **H04Q 11/04**, H04Q 3/545

(21) Anmeldenummer: **88112263.4**

(22) Anmeldetag: **28.07.88**

(54) **Modular strukturiertes digitales Kommunikationssystem mit betriebstechnischen Kommunikationsmitteln.**

(30) Priorität: **21.08.87 DE 3727954**

(43) Veröffentlichungstag der Anmeldung:
**22.02.89 Patentblatt 89/08**

(45) Bekanntmachung des Hinweises auf die
Patenterteilung:
**01.07.92 Patentblatt 92/27**

(84) Benannte Vertragsstaaten:
**AT BE CH DE FR GB IT LI**

(56) Entgegenhaltungen:

**TELESIS/BNR, Nr. 1, 1987, Seiten 15-21, Ottawa, CA; D. FRAME et al.: "Meridian SL-100. Building block technologies bring digital to the desktop"**

**NACHRICHTENTECHNISCHE ZEITSCHRIFT N.T.Z., Band 39, Nr. 6, Juni 1986, Seiten 394-397, Berlin, DE; F. KADERALI et al.: "Steuerungskonzept einer ISDN-Vermittlungsanlage"**

**PROCEEDINGS OF THE INTERNATIONAL SWITCHING SYMPOSIUM, Florenz, 7.-11. Mai 1984, Teil 1, "Session 24 A", "Paper 1", Sei-**

**ten 1-7, North-Holland, Amsterdam, NL; G. RAAB et al.: "Architectural aspects for ISDN-PABX's in office communications systems"**

**TELCOM REPORT, Sonderheft, 1985, "ISDN im Büro-HICOM", Seiten 67-75, München, DE; G. OTT et al.: "HICOM-Software von heute für morgen"**

(73) Patentinhaber: **SIEMENS AKTIENGESELL-SCHAFT**
**Wittelsbacherplatz 2**
**W-8000 München 2(DE)**

(72) Erfinder: **Kuhlmann, Klaus, Dipl.-Ing.**
**Auenstrasse 102**
**W-8000 München 5(DE)**
Erfinder: **Elstner, Siegfried, Dipl.-Ing.**
**Am Bogen 18**
**W-8031 Eichenau(DE)**

EP 0 303 869 B1

**Beschreibung**

Modular strukturierte digitale Kommunikationssysteme dienen zur Verbindung von Endgeräten mit im allgemeinen vielfältigen Leistungsmerkmalen untereinander und zur Verbindung dieser Endgeräte mit Kommunikationsnetzen, insbesondere öffentlichen Netzen. Durch eine Sonderausgabe von "Telcom Report" - ISDN im Büro -1985, ist ein derartiges Kommunikationssystem bekannt, an das analoge und digitale Telefone, Fernkopierer, multifunktionale Terminals, Arbeitsplatzsysteme, Personal Computer, Teletex- und Bildschirmtextstationen und Datenendgeräte anschließbar sind. Die Struktur des Systems ist derart konzipiert, daß neben digitalen Terminals auch herkömmliche Geräte mit analoger Übertragung angeschlossen werden können; ebenso kann eine Vernetzung mit anderen Kommunikationssystemen hergestellt werden. Wesentlicher Bestandteil dieses Kommunikationssystems ist ein zentraler Kommunikationsrechner mit einer Systemdatenbasis und zumindest einem Multitasking-Betriebssystem. Unter einer "Task" ist dabei eine selbständige unabhängige Ablaufeinheit zu verstehen, die aus einem ablauffähigen Programm sowie seiner jeweiligen Ablaufumgebung, z. B. Speicherbelegung oder Gerätezuteilung, besteht. Jede Task befindet sich zu jedem Zeitpunkt in einem der Zustände "Aktiv", "Warten" oder "Ruhe". Tasks können vermittels eines Multitasking-Betriebssystems parallel zueinander ablaufen, wobei dies in der Praxis sowohl mittels mehrerer unabhängig voneinander arbeitender Prozessoren als auch mittels eines einzigen Prozessors in einem Zeitmultiplexverfahren erfolgen kann. Weitere wesentliche Eigenschaften von Tasks sind, daß sie mittels Meldungen miteinander kommunizieren und sich gegenseitig synchronisieren können.

Die Leistungsfähigkeit eines derartigen digitalen Kommunikationssystems wird wesentlich durch die Software-Struktur des Systems bestimmt. Das bekannte Kommunikationssystem weist eine modular strukturierte Software-Architektur auf, deren wesentliche Bestandteile einerseits das Multitasking-Betriebssystem bzw. die Datenbasis und andererseits die eigentliche Vermittlungs-Software, bestehend aus der Peripherie-Software, der Leitungstechnik-Software und der vermittlungstechnischen Verbindungs-Software sind. Die Verteilung von Teilkomplexen der Steuerungs-Software auf einzelne Software-Module bzw. die gesamte Software-Struktur des bekannten Kommunikationssystems sind auf eine Anlagengröße von mehreren hundert bis zu mehreren tausend Anschlüssen abgestimmt.

Die Leistung und der Nutzen eines derartigen Kommunikationssystems hängen wesentlich von der Organisierbarkeit und Wartbarkeit des Systems ab, die neben anderen Aspekten unter den Begriff Betriebstechnik subsummiert werden. Die Organisierbarkeit des Systems soll die Berücksichtigung individueller Nutzeranforderungen bezüglich des Anlagenausbaus, des Numerierungsplans, der Geräte- und Kommunikationsdienstevielfalt auf schnelle, einfache, sichere und bedienungsfreundliche Weise ermöglichen. Die wichtigsten Aufgaben der Wartung sind beispielsweise manuelle Schaltaufträge für das Sperren, Entsperren und Umschalten von Systemeinheiten, manuelle Prüfaufträge, die Ablaufverfolgung und Diagnosegewinnung sowie eine Klartext-Ausgabe für den Anlagenbetreiber. Voraussetzung für die Organisierbarkeit und Wartbarkeit des Systems ist eine umfassende "Verwaltung" des Kommunikationssystems; zu dieser "Verwaltung" gehören Datenspeichergenerierung und -regenerierung, Speicherung und Pflege der Kundendaten für Anlagenkonfiguration, Kommunikationsdienste und Endgeräte sowie Verkehrsmessungen.

Die der Erfindung zugrundeliegende Aufgabe besteht darin, eine Steuer- und Organisationsstruktur für die Durchführung sämtlicher betriebstechnischer Aufgaben zu schaffen, wobei eine optimale Anpassung dieser Steuer- und Organisationsstruktur an eine bestimmte vermittlungstechnische Steuer- und Organisationsstruktur eines digitalen Kommunikationssystems erfolgen soll. Bei diesem den Ausgangspunkt der Erfindung darstellenden modular strukturierten digitalen Kommunikationssystem sind in einer Leitungstechnik-Task Geräteprogrammodule angeordnet, die endgeräteartenspezifisch das Signalisierungsverfahren und die Benutzeroberfläche der Endgeräte derart steuern, daß von den Endgeräten abgegebene Anreize mittels systemspezifischer Parameter in logische Meldungen für den Kommunikationsrechner und logische Meldungen des Kommunikationsrechners in Einstelldaten für die Endgeräte umgesetzt werden. In einer eine zweite Strukturebene darstellenden Vermittlungstechnik-Task sind Vermittlungsprozedur-Programmodule vorgesehen, die endgeräteklassenunabhängig und kommunikationsdiensteunabhängig im Sinne der Bildung logischer Teilprozesse des gesamten Vermittlungsprozesses strukturiert sind. Das Multitasking-Betriebssystem des Kommunikationsrechners weist eine Programm-Busstruktur mit einem kommunikationsdienste- und endgeräteartenunabhängig allgemeingültig festgelegten Übertragungsprotokoll der darüber übermittelten Meldungen im Sinne eines logischen Netzknotens für die Verbindung der Vermittlungsprozedur-Programmodule mit den Geräteprogrammodulen auf.

Mit dieser Organisations- und Steuerstruktur des Kommunikationssystems ist der für die Praxis wesentliche Vorteil verbunden, daß ein derartiges Kommunikationssystem in einer beliebigen Erstausstattung später jederzeit durch zusätzliche Endgerätearten und Kommunikationsdienste ergänzbar ist, ohne daß die Grundstruktur des modular strukturierten Kommunikationssystems geändert werden muß. Bei Auftreten neuer Endgerätearten oder Kommunikationsdienste muß lediglich ein entsprechendes Geräteprogrammodul in die Leitungstechnik-Task eingefügt werden, während die übrigen Strukturbestandteile, also insbesondere die Vermittlungstechnik-Task, davon unbeeinflußt bleiben. Dies ist im wesentlichen dadurch bedingt, daß die Abhängigkeiten von Kommunikationsdiensten und Endgerätearten allein in den Bereich der Leitungstechnik-Task bzw. in den der Datenbasis verlegt sind, so daß die Vermittlungtechnik-Task auf eine reine Verbindungssteuerung unabhängig von der Art der miteinander zu verbindenden Endgeräte und der von diesen genutzten Kommunikationsdienste ausgelegt werden kann.

Die mit der Erfindung angestrebte optimale Anpassung einer betriebstechnischen Organisations- und Steuerstruktur an ein solches Kommunikationssystem wird erreicht durch ein modular strukturiertes digitales Kommunikationssystem zur Verbindung von Endgeräten untereinander und mit insbesondere öffentlichen Netzen mit einem zentralen Systemrechner mit einer Systemdatenbasis und zumindest einem Multitasking-Betriebssystem

- zur Verwaltung einer Leitungstechnik-Taskstruktur mit endgeräteartenspezifischen Betriebstechnik-Geräteprogrammodulen zum Generieren logischer Betriebstechnik-Meldungen aus an den Endgeräten und/oder Betriebstechnik-Endgeräten vorgenommenen Eingaben und zur Abgabe von aus logischen Betriebstechnik-Meldungen gewonnenen geräteartspezifischen Einstelldaten für die Endgeräte und/oder Betriebstechnik-Endgeräte und
- zur Verwaltung einer einer Vermittlungstechnik-Taskstruktur hierarchisch gleichgestellten betriebstechnischen Koordinierung-Taskstruktur mit einem einem Koordinierung-Taskorganisationsprogramm hierarchisch untergeordneten Koordinierung-Programmodul zur Steuerung des betriebstechnischen Informations- und Datenflusses und
- zur Verwaltung einer betriebstechnischen Applikation-Taskstruktur mit wenigstens einem einem Applikation-Taskorganisationsprogramm hierarchisch untergeordneten Applikation-Programmodul zur Abwicklung applikationsorientierter Funktionen, z. B. Inbetriebnahme, Wartung, Fernbetriebstechnik
- wobei zumindest einem Teil der Programmodule jeweils individuell über definierte Datenbasiszugriffsroutinen die Datenbasis zugänglich ist,
- das (Multitasking-Betriebssystem) eine Programm-Busstruktur mit einem kommunikationsdienste- und endgeräteartenunabhängig definierten Übertragungsprotokoll - virtuelles Terminalprotokoll - für zwischen der Leitungstechnik-Taskstruktur und der Koordinierung-Taskstruktur übertragene Meldungen und mit einem ebenfalls kommunikationsdienste- und endgeräteartenunabhängig definierten, eine zumindest annähernd steuerzeichenfreie, gedrängte Datenanordnung vorsehenden weiteren Übertragungsprotokoll - virtuelles Applikationsprotokoll - für innerhalb der Applikation-Taskstruktur und zwischen dieser und der Koordinierung-Taskstruktur übertragene Meldungen aufweist, und

mit einem Textprozessor-Programmodul zur Konvertierung von Meldungen in einem der beiden Übertragungsprotokolle in Meldungen im jeweils anderen Übertragungsprotokoll.

Die erfindungsgemäße Organisations- und Steuerstruktur basiert also im wesentlichen auf der Abwicklung aller gerätespezifischen Funktionsabläufe im Rahmen betriebstechnischer Aufträge in Betriebstechnik-Geräteprogrammodulen, d. h. in der Schaffung von geräteunabhängigen virtuellen Schnittstellen sowie einerseits in der Steuerung und Realisierung aller funktionalen Abläufe für den betriebstechnischen Informations- und Datenfluß im Koordinierung-Programmodul und andererseits der Abwicklung aller applikationsorientierten Aufgaben in Applikation-Programmodulen. Ergänzt sind diese Strukturmerkmale durch die Anwendung standardisierter Mechanismen zwischen den einzelnen Taskstrukturebenen unter Einsatz zweier bestimmter Übertragungsprotokolle und eines u. a. die Aufgaben der Protokollkonvertierung übernehmenden Textprozessor-Programmodules.

Die Struktur des erfindungsgemäßen Kommunikationssystems ermöglicht für die Realisierung der betriebstechnischen Komponenten eine ausgeprägte strikte Modularität in dem Sinne, daß Kommunikationssysteme jeweils kundenspezifisch ohne Anpassungen außerhalb der eigentlichen Module aufgebaut werden können und daß das spätere Hinzutreten neuer Endgerätearten, neuer Leistungsmerkmale solcher Endgeräte oder das Auftreten neuer Kommunikationsdienste mit den vorhandenen oder neuartigen Endgeräten bezüglich der Betriebstechnik des gesamten Kommunikationssystems durch Hinzufügen neuer Module, insbesondere von Applikation-Programmodulen beherrscht werden kann. Das erfindungsgemäße Kommunikationssystem bietet also eine ausgeprägte Anpassungsfähigkeit an einen umfangreichen bzw. veränderten Leistungsumfang ohne objektive Beeinflussung der eigentlichen Systemstruktur bzw. der dieser Systemstruktur immanenten Systemstrategie. Innerhalb der betriebstechnischen Organisations- und Steuerstruktur der Systembetriebstechnik werden drei prinzipiell unterschiedliche Datenformate zur Kommunikation unter den betriebstechnischen Kommunikationsmitteln verwendet. Neben dem virtuellen Terminalprotokoll und dem virtuellen Applikationsprotokoll tritt noch bezüglich des Textprozessor-Programmoduls ein Mensch-Maschine-Übersetzerprotokoll auf.

Das virtuelle Terminalprotokoll besteht aus einer sich abwechselnden Sequenz von Steuerinformationen und Dateninformationen, wobei die Dateninformationen aus üblichen Stringelementen, vorzugsweise im ASCII-Format, bestehen und die Steuerinformationen logische Steuerkriterien für die Ein- und Ausgabe solcher Stringelemente (z. B. Positionieranweisungen, Abbildungsattribute und Feldzuordnungskriterien) enthalten. Das virtuelle Terminalprotokoll dient als Datenschnittstelle eines virtuellen Terminals, als daß sich in dieser Schnittstelle jedes Terminal vom und zum System darstellt. Somit können prinzipiell viele Arten von Eingabe- und Ausgabegeräten, insbesondere auch Fernsprechendgeräte für die Einleitung betriebstechnischer Aufgaben und die zugehörige Dialogführung zugelassen sein; allerdings ist die physikalische Voraussetzung eines für betriebstechnische Aufgaben nahezu unverzichtbaren Bildschirmes nur in wenigen Fällen gegeben. Als Abhilfe dagegen werden solche Endgeräte durch entsprechende endgeräteartenspezifische Betriebstechnik-Geräteprogrammodule in die Lage versetzt, durch eine erweiterte Ausnutzung der Eingabe- und Ausgabemöglichkeiten, z. B. Displays, eine Bildschirmfunktion z. B. durch Fenstertechnik oder "Scrolling" nachzubilden.

Um die Informationen im virtuellen Terminalprotokoll möglichst effizient übertragen zu können, ist gemäß einer vorteilhaften Weiterbildung der Erfindung vorgesehen, daß in den Meldungen im virtuellen Terminalprotokoll jeweils nur gegenüber einem einer vorhergehenden Meldung zugrundeliegenden Zustand geänderte Daten übertragen werden. Bei einer Übertragung derartig geänderter Daten muß allerdings zwischen der Neudefinition einer Ausgabestruktur (Maske) und der Einsetzung von "Deltadaten" in diese Maske unterschieden werden. Bei der Definition einer Ausgabestruktur wird durch die geänderten Daten die Feldeinteilung geändert, andernfalls nur der Feldinhalt.

Die Meldungen im virtuellen Terminalprotokoll sind ebenso wie die Meldungen im virtuellen Applikationsprotokoll bevorzugt derart aufgebaut, daß auf ein System-Datenkopfteil mit einer definierten Reihenfolge von Meldungsursprungs- und Meldungszieladressen ein betriebstechnikspezifischer Datenkopfteil mit einer für die beiden Protokolle unterschiedlichen Protokollidentifizierungsinformationen, einer Bezeichnung einer Auftragssession, zu der die jeweilige Meldung gehört und einer das für die Abarbeitung der Auftragssession notwendige Applikation-Programmmodul bezeichnenden Zieladresse folgt.

Über das virtuelle Applikationsprotokoll werden insbesondere die Daten zwischen dem Textprozessor-Programmodul und den Applikations-Programmodulen ausgetauscht. Die in diesem Protokoll übertragenen Daten sind bereits nach der Syntax überprüft und vorzugsweise komprimiert. Die angegebenen Parameter werden dichtliegend eingetragen, damit bei der Übertragung zu einem jeweils anderen Programmodul nicht das gesamte Protokoll weitergegeben werden muß; die im virtuellen Applikationsprotokoll übertragenen Informationen haben also einen geringeren Umfang als die im virtuellen Terminalprotokoll übergebenen Daten, da bei diesen alle Steuerzeichen enthalten sind. Das virtuelle Applikationsprotokoll ist bevorzugt sprachunabhängig definiert, so daß z. B. Eingaben in einer anderen Sprache als zugehörige Ausgaben erfolgen können. Durch Anwendung verschiedensprachiger Texttabellen ist eine einfache Anpassung - z. B. von Session zu Session verändert - möglich. Sofern - wie eine vorteilhafte Weiterbildung der Erfindung vorsieht - das Textprozessor-Programmodul in ein vorzugsweise durch einen Personal Computer realisiertes Betriebstechnik-Endgerät eingefügt ist, in dem den einzelnen Applikationen immanente Datentabellen gespeichert sind, die durch ein funktionell wie das Koordinierung-Programmmodul strukturiertes Systemprogramm des Betriebstechnik-Endgerätes in die Abarbeitung betriebstechnischer Aufträge einzogen werden, besteht die Möglichkeit, zu solchermaßen ausgestatteten Endgeräten mit einem durch die besonderen Eigenschaften des virtuellen Applikationsprotokolls bedingten verhältnismäßig geringen Informationsumfang auszukommen. Dadurch wird das Betriebssystem und die Transportsteuerung der Software-Busstruktur des Kommunikationssystems entlastet. Eine wesentliche Entlastung der Speicherkapazität des Kommunikationssystems wird dabei durch die Ausspeicherung der Applikationstabellen auf den Personal Computer ermöglicht. Die eventuell notwendige Prüfung eines Parameters gegen die Datenbasis erfolgt weiterhin im System durch das dort weiterhin vorhandene entsprechende Applikation-Programmodul. Auch in den Fällen, in denen in einem peripheren Personal Computer die Funktionen des Textprozessor-Programmoduls und des Koordinierung-Programmoduls vorhanden sind, verbleiben die entsprechenden Programmodule innerhalb der im Rahmen der Erfindung vorgesehenen Task-Strukturebenen. Das Koordinierung-Programmodul stellt dann aber für den verbleibenden Datenverkehr - im virtuellen Applikationsprotokoll - mit dem Betriebstechnik-Endgerät ein reines Übergabemodul für solche Daten zu den Applikation-Programmodulen dar.

Auch für das Textprozessor-Programmodul gilt, daß es unabhängig vom Vorsehen einer entsprechenden Fähigkeit der Protokollkonvertierung in einem Betriebstechnik-Endgerät in die betriebstechnische Applikation-Taskstruktur eingefügt ist. Das Textprozessor-Programmodul ist somit im weiteren Sinne auch als Applikation-Programmodul aufzufassen, das zur Umsetzung von Kommandoinformationen - z. B. nach CCITT Man-Machine-Language - in applikationsgerechte Dateninformationen dient. Das Textprozessor-Programmodul liefert außerdem die zur Benutzerdialogführung benötigten logischen Steuerkriterien, wobei für die Benutzerdialogführung sowohl 'line'- als auch maskenorientierte Verfahren verwendet werden. Weitere - teilweise bereits erwähnte -Teilaufgaben des Textprozessor-Programmoduls sind die Syntaxüberprüfung, die Analyse von Kommandos entsprechend Parameterbaumdefinitionen - Parsing - die Durchführung von Parametereinzelprüfungen gegen applikationsbezogene Datentabellen und die Aufbereitung von Ausgabetexten.

Über das Koordinierung-Programmodul werden alle betriebstechnischen Zugriffe auf das Kommunikationssystem gesteuert, wobei der betriebstechnische Ablauf bevorzugt sessionorientiert erfolgt, um den exklusiven Gebrauch der datentechnischen Verbindung für den Benutzer zu gewährleisten. Vom Koordinierung-Programmodul wird demgemäß jeweils der Aufbau, die zeitliche Überwachung und das Beenden einer Session gesteuert. Im Zusammenhang damit verwaltet das Koordinierung-Programmodul interne Speicherressourcen für die jeweilige Session.

Gemäß einer vorteilhaften Ausgestaltung der Erfindung wird dem Koordinierung-Programmodul insofern eine zentrale Position innerhalb der Steuerungsabläufe des betriebstechnischen Informations- und Datenflusses zugewiesen, als es derart strukturiert ist, daß es in Abhängigkeit von der Art der innerhalb eines betriebstechnischen Auftrages angesprochenen Applikationen die Ansteuerung der entsprechenden Applikation-Programmodule einleitet.

Weitere, vom Koordinierung-Programmodul gesteuerte Vorgänge sind freilaufende Datenausgaben ohne Reservierung eines Ausgabe-Endgerätes, zusammenhängende Datenausgaben mit absoluter oder bedingter Reservierung eines Ausgabe-Endgerätes und priorisierte Datenausgaben ggf. mit der Möglichkeit der Unterbrechung einer bedingten Reservierung bei Auftreten einer priorisierten Datenausgabe.

tenausgabe.

Das Koordinierung-Programmodul kann bei Vorliegen von Daten, insbesondere Applikationstabellen in peripheren Dateien, dadurch ergänzt bzw. unterstützt werden, daß in die betriebstechnische Koordinierung-Taskstruktur ein einem Dateiverwaltung-Taskorganisationsprogramm hierarchisch untergeordnetes Dateiverwaltung-Programmodul zur Steuerung des Zugangs zu peripheren Dateien eingefügt ist. Auch für solche Fälle wird die grundsätzliche Organisations- und Steuerstruktur des erfindungsgemäßen Kommunikationssystems dadurch beibehalten, daß in die Leitungstechnik-Taskstruktur ein Speicher-Programmodul zur Steuerung von Such-, Lese- und Schreibaufträgen für die Dateien aufnehmende Speicher eingefügt ist. Das Speicher-Programmodul kann dabei derart strukturiert sein, daß es Warteschlangen für vom Dateiverwaltung-Programmodul initiierte derartige Aufträge auf- und abbaut.

Eine weitere vorteilhafte Ausgestaltung der Erfindung basiert auf der dem Koordinierung-Programmodul immanenten Fähigkeit der Ansteuerung der unterschiedlichen Applikation-Programmodule und sieht in diesem Zusammenhang vor, daß in die betriebstechnische Applikation-Taskstruktur ein einem Applikationsverbindung-Taskorganisationsprogramm hierarchisch untergeordnetes Applikationsverbindung-Programmodul zum Aufbau und zur Verwaltung der Verbindung des Koordinierung-Programmoduls mit einem der Applikation-Programmodule eingefügt ist. In das Applikationsverbindung-Programmodul ist dann vorzugsweise die Prüfung auf das Vorhandensein bestimmter angesprochener Applikation-Programmmodule in der betriebstechnischen Applikation-Taskstruktur und ggf. das Einladen solcher Applikationstabellen aus peripheren Dateien in die Applikation-Taskstruktur unter Einbeziehung des Dateiverwaltung-Programmoduls und des Speicher-Programmoduls verlagert.

Das Zusammenwirken des Koordinierung-Programmoduls und des Applikationsverbindung-Programmoduls erfolgt dabei bevorzugt derart, daß die von einem Betriebstechnik-Endgerät eingegebenen und von einem zugehörigen Betriebstechnik-Geräteprogrammodul aufbereiteten Daten vom Koordinierung-Programmodul an das Textprozessor-Programmodul zur Prüfung übergeben werden, welches Applikation-Programmodul zur weiteren Bearbeitung benötigt wird; eine vom Ergebnis dieser Prüfung abhängige Meldung wird dann an das Applikationsverbindung-Programmodul abgegeben, das eine Verbindung des Koordinierung-Programmoduls mit dem benötigten Applikation-Programmodul aufbaut, über die das Koordinierung-Programmodul die vom Textprozessor-Programmodul konvertierten Auftragsdaten im virtuellen Applikationsprotokoll an das Applikation-Programmmodul abgibt, das nach Abarbeitung der applikationsspezifischen Prozeduren das Prozedurenresultat wiederum im virtuellen Applikationsprotokoll an das Koordinierung-Programmodul übergibt.

Die in die betriebstechnische Applikation-Taskstruktur eingeführten Applikation-Programmodule sind Systemkomponenten zur Durchführung der Einzelaufgaben für die Inbetriebnahme, Wartung und Verwaltung des Kommunikationssystems sowie für die Zusammenstellung von Systemstatusdaten für die Datenausgabe und die Anlagenbetreuung. Jedes Applikation-Programmodul hat einen definierten Funktionsumfang, wobei die Definition der einzelnen Applikation-Programmodule so erfolgt, daß durch aufeinanderfolgendes Aufrufen der einzelnen Applikation-Programmodule eine große Vielfalt unterschiedlicher komplexer betriebstechnischer Aufträge bearbeitet werden kann. Grundsätzlich können die Applikation-Programmodule in vier verschiedene Applikationskategorien eingeteilt werden:

1. Standardapplikationen

Dies sind Applikationen, die sich auf die Datenbasis des Kommunikationssystems beziehen. Mit Hilfe solcher Applikationen können beispielsweise anlagenspezifische Daten, wie Berechtigungen oder Numerierungsplan, eingerichtet bzw. geändert werden. Der Zugriff auf die Datenbasis erfolgt dabei über die definierten Datenbasis-Zugriffsroutinen.

2. Systemapplikationen

Die Basis für diese Applikationen sind die betriebstechnischen sessionorientierten Daten; mit Hilfe dieser Applikationen können beispielsweise Masken für bestimmte Ausgabeformate festgelegt werden oder eine Speicherung von aktiven betriebstechnischen Hintergrundprozeduren bzw. ein Aufruf oder eine Unterbrechung derselben erfolgen.

3. Hintergrundapplikationen

Solche Hintergrundapplikationen dienen beispielsweise der Aufnahme von Daten eines laufenden betriebstechnischen Auftrages, um beispielsweise ein Betriebstechnik-Endgerät für weitere Eingaben freizugeben, noch ehe der laufende betriebstechnische Vorgang völlig beendet ist.

4. Permanente Applikationen

Mit diesen Applikationen, die bevorzugt als eigenständige Task organisiert sind, können beispielsweise selbständige Ausgabeaktivitäten - z. B. Alarmausgaben an Alarmfeldern - ohne Mitwirken des Koordinierung-Programmodul durchgeführt werden.

Bezüglich der Struktur der Einzelkomponenten des modular strukturierten Kommunikationssystems sieht eine vorteilhafte Ausgestaltung der Erfindung vor, daß die den Endgeräten und die den Betriebstechnik-Endgeräten zugeordneten Betriebstechnik-Geräteprogrammodule eine von den Endgeräten bzw. Betriebstechnik-Endgeräten abgegebene Anreize nach individuellen Leitungskriterien bewertende und Meldungen aus der betriebstechnischen Taskstruktur in Einstelldaten für die Endgeräte bzw. Betriebstechnik-Endgeräte umsetzende Vorverarbeitungs-Programmebene und eine die Anreize mittels systemspezifischer Parameter in protokollgerechte Meldungen umsetzende Bewertungs-Programmebene aufweisen. Bei Benutzung von ISDN-Endgeräten und speziellen Betriebstechnik-Endgeräten, mit denen generell logische Anreize generiert werden, kann auf das Heranziehen systeminterner Parameter für die Bewertung der logischen Anreize verzichtet werden; die Bewertungs-Programmebene kann in solchen Fällen als logische Null-Funktion betrachtet werden. Zweckmäßigerweise ist den Betriebstechnik-Endgeräten jeweils ein speziell auf die verwendete Endgeräteart zugeschnittenes Betriebstechnik-Geräteprogrammodul zugeordnet, das lediglich für den betriebstechnischen Informations- und Datenfluß eine virtuelle Schnittstelle bildet. Im Gegensatz dazu können die den eigentlichen vermittlungstechnischen Endgeräten zugeordneten Betriebstechnik-Geräteprogrammodule ein Teilmodul eines zumindest ein weiteres Teilmodul für die Verarbeitung vermittlungstechnischer Anreize und Meldungen aufweisenden endgeräteartenspezifischen Geräteprogrammoduls darstellen, wobei ein in der Bewertungs-Programmebene residentes Zuordnungsprogramm jeweils funktionsabhängig Meldungen und Informationen auf die beiden Teilmodule verzweigt. Die Vorverarbeitungs-Programmebene kann dabei für beide Teilmodule benutzt werden.

Die Einbettung der Leitungstechnik-Taskstruktur in das gesamte Kommunikationssystem bzw. insbesondere die Anbindung der Leitungstechnik-Taskstruktur an die eigentliche Peripherie erfolgt bevorzugt derart, daß ein von einem Eingabe/Ausgabeprozessor verwalteter Peripheriespeicher jeweils einen jeweils unabhängig voneinander steuerbaren Eingabeanschluß für in der Leitungstechnik-Task gewonnene Meldungen für die Endgeräte bzw. Betriebstechnik-Endgeräte und Ausgabeanschluß für aus Anreizen der Endgeräte bzw. Betriebstechnik-Endgeräte gewonnene Meldungen aufweist.

Um eine möglichst einheitliche Struktur für die Transportfunktionen zwischen den einzelnen Strukturebenen des Kommunikationssystems zu erhalten, werden bevorzugt dem Eingabeanschluß als auch dem Ausgabeanschluß jeweils ein mailboxartig betriebener Übergabespeicher zugeordnet, mit dem die Betriebstechnik-Geräteprogrammodule der Leitungstechnik-Task verknüpft werden und erfolgt darüberhinaus generell die Übermittlung von Meldungen zwischen den einzelnen Strukturebenen und teilweise auch innerhalb der Strukturebenen durch jeweils wenigstens einen mailboxartig betriebenen Eingabe- und Ausgabespeicher für jede Task innerhalb der Leitungstechnik-Taskstruktur, der betriebstechnischen Koordinierung-Taskstruktur und der betriebstechnischen Applikation-Taskstruktur.

In gleicher Weise, wie die Übermittlung von Meldungen zwischen der Leitungstechnik-Taskstruktur der Vermittlungstechnik-Taskstruktur, erfolgt demgemäß die Übermittlung der von den Endgeräten initiierten Anreize an die Betriebstechnik-Geräteprogrammodule in einer Transportschicht eines Meldungsprotokolles des Multitasking-Betriebssystems, was dadurch systemtechnisch erleichtert werden kann, daß der Eingabe/Ausgabeprozessor mit einem mit dem Multitasking-Betriebssystem identischen Betriebssystem ausgestattet ist.

Insgesamt sind als wesentliche Vorteile der Erfindung in ihrer Grundstruktur bzw. in ihren durch die verschiedenen vorteilhaften Ausgestaltungen der Erfindung entstehenden Strukturergänzungen anzusehen, daß die Betriebstechnik-Geräteprogrammodule endgeräteartenspezifisch ausgebildet sind und daß kommunikationsdienste- und endgeräteartenunabhängig allgemeingültig festgelegte Übertragungsprotokolle für die über die Programm-Busstruktur des Multitasking-Betriebssystems übermittelten betriebstechnischen Meldungen vorgesehen sind. Für die Praxis ergibt sich damit der wesentliche Vorteil, daß der betriebstechnische Informations- und Datenfluß eines derartigen digitalen Kommunikationssystems einer beliebigen Erstausstattung später jederzeit auf zusätzliche Endgerätearten und Kommunikationsdienste durch Einfügen entsprechender Programmodule in die Leitungstechnik-Taskstruktur und/oder in die Applikation-Taskstruktur abgestimmt werden kann. Insgesamt ermöglicht das erfindungsgemäße Kommunikationssystem die unkomplizierte Anpassung einer betriebstechnischen Daten- und Informationsflußstruktur an jede Änderung eines Grundausbaus eines bestimmten modular strukturierten digitalen Kommunikationssystems, z. B. bei Teilnehmervermehrung, Leistungsmerkmalvermehrung und Endgeräteartenerweiterung, innerhalb desselben. Sämtliche Vermehrungen und Erweiterungen werden also auch im Bereich der betriebstechnischen Organisations- und Steuerstruktur durch zusätzliche Betriebstechnik-Geräteprogrammodule und Applikation-Programmodule aufgefangen.

Die Erfindung wird im folgenden anhand eines in fünf Figuren dargestellten Ausführungsbeispiels erläutert.

Dabei zeigen:

Fig. 1   Organisations- und Steuerstruktur für den betriebstechnischen Informations- und Datenfluß eines digitalen Kommunikationssystems,

Fig. 2   Struktur eines Betriebstechnik-Geräteprogrammoduls der Leitungstechnik-Taskstrukturebene,

Fig. 3   eine in der Fig. 1 enthaltene Leitungstechnik-Task mit Geräteprogrammodulen für die Anpassung an unterschiedliche Arten von Endgeräten in detaillierter Darstellung,

Fig. 4   Informations- und Datenfluß innerhalb der betriebstechnischen Organisations- und Steuerstruktur während der Durchführung eines betriebstechnischen Auftrages und

Fig. 5   bestehend aus fünf aufeinanderfolgenden, eine Einheit bildenden Figuren 5a, 5b, 5c, 5d, 5e einen graphischen Übersichtsplan über den Meldungsfluß zwischen den einzelnen Programmodulen des digitalen Kommunikationssystems während der Abarbeitung betriebstechnischer Aufträge.

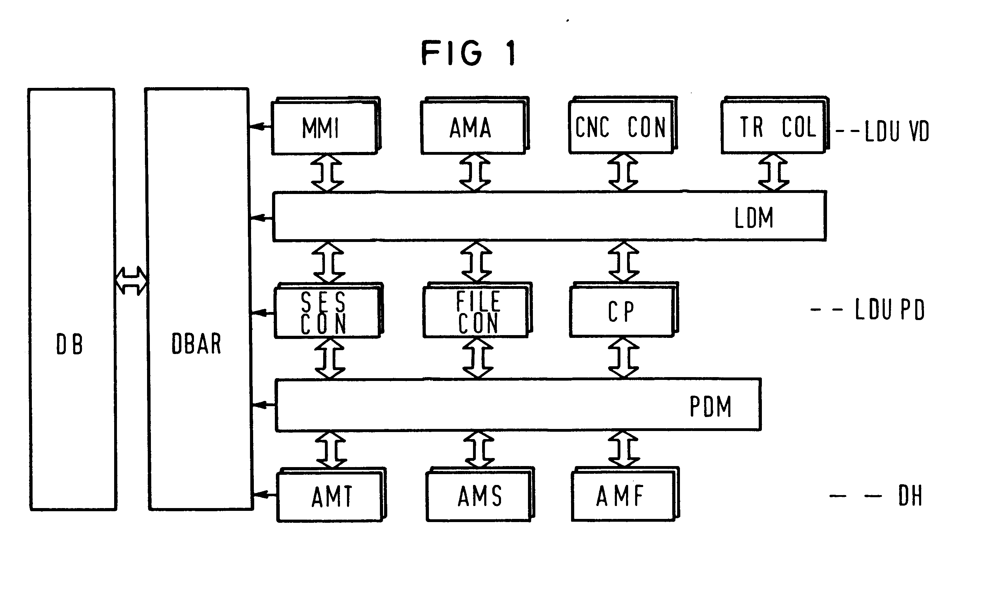

Die in der Fig. 1 dargestellte Organisations- und Steuerstruktur für den betriebstechnischen Daten- und Informationsfluß innerhalb eines modular strukturierten Kommunikationssystem weist drei Steuerebenen mit je einer Taskstruktur DH, LDU PD, LDU VD auf, zwischen denen Meldungen über eine Programm-Busstruktur PDM, LDM ausgetauscht werden. In der peripherienahen Leitungstechnik-Taskstruktur DH sind drei jeweils endgeräteartenspezifische Betriebstechnik-Geräteprogrammodule AMT, AMS, AMF angeordnet, von denen das eine AMT einem betriebstechnischen Terminal, das zweite AMS einem digitalen Fernsprechendgerät und das dritte AMF einem peripheren Speicher zugeordnet ist. Der Austausch von Meldungen zwischen den Betriebstechnik-Geräteprogrammodulen AMT, AMS, AMF und der nachgeordneten betriebstechnischen Koordinierung-Taskstruktur LDU PD erfolgt in einem definierten Übertragungsprotokoll - virtuelles Terminalprotokoll - über einen Programmbus PDM der Programm-Busstruktur PDM, LDM. Die betriebstechnische Koordinierung-Taskstruktur LDU PD ist einer Vermittlungstechnik-Taskstruktur - in Fig. 1 durch ein Vermittlungstechnik-Programmodul CP repräsentiert - hierarchisch gleichgestellt. Funktionell wesentlichster Bestandteil der betriebstechnischen Koordinierung-Taskstruktur LDU PD ist ein Koordinierung-Programmodul SES CON, über das im wesentlichen der Daten- und Informationsfluß verläuft und gesteuert wird.

Ein ebenfalls in der betriebstechnischen Koordinierung-Taskstruktur LDU PD angeordnetes Dateiverwaltung-Programmodul FILE CON dient der Steuerung des Zugangs von Programmodulen der betriebstechnischen Applikation-Taskstruktur LDU VD zu peripheren Dateien.

In der betriebstechnischen Applikation-Taskstruktur LDU VD ist als Repräsentant einer im allgemeinen größeren Anzahl von Applikation-Programmodulen ein einziges derartiges Applikation-Programmodul AMA dargestellt. Dieses Applikation-Programmodul AMA dient, wie andere nicht dargestellte weitere Applikation-Programmodule, zur Abwicklung von betriebstechnischen Aufgaben im Zusammenhang mit der Inbetriebnahme, der Wartung und der Verwaltung des digitalen Kommunikationssystems. Im weiteren Sinne kann ein Verkehrsdatenerfassung-Programmodul TR COL als Applikation-Programmodul interpretiert werden. Das Verkehrsdatenerfassung-Programmodul dient zur Erfassung teilnehmer- bzw. kommunikationsdienstbezogener Verbindungsinformationen, wobei die notwendigen Verbindungsinformationen von dem in die Vermittlungstechnik-Taskstruktur eingefügten Vermittlungstechnik-Programmodul in Form von Meldungen eines vermittlungstechnikspezifischen Meldungsprotokolls über den Programmbus LDM der Programm-Busstruktur PDM, LDM übergeben werden.

Ein weiterer wesentlicher Bestandteil der betriebstechnischen Applikation-Taskstruktur LDU VD ist ein Textprozessor-Programmodul MMI, das die zur Benutzerdialogführung benötigten logischen Steuerkriterien liefert. Wesentliche Aufgabe des Textprozessor-Programmoduls MMI ist die Konvertierung von Meldungen im virtuellen Terminalprotokoll in Meldungen eines virtuellen Applikationsprotokolls und umgekehrt; während das virtuelle Terminalprotokoll für Meldungen zwischen der Leitungstechnik-Taskstruktur DH und der betriebstechnischen Koordinierung-Taskstruktur LDU PD sowie für Meldungen vom Koordinierung-Programmodul SES CON zum Textprozessor-Programmodul MMI benutzt wird, werden alle Meldungen - mit Ausnahme von vom virtuellen Applikationsprotokoll in das virtuelle Terminalprotokoll konvertierten Meldungen -vom Textprozessor-Programmodul MMI an das Koordinierung-Programmodul SES CON im virtuellen Applikationsprotokoll übertragen, das sich gegenüber dem virtuellen Terminalprotokoll durch eine verdichtete Datenfolge und damit geringere Länge auszeichnet.

Ebenfalls in der betriebstechnischen Applikation-Taskstruktur LDU VD ist ein Applikationsverbindung-Programmodul CNC CON angeordnet, das zum Aufbau und zur Verwaltung der Verbindung des Koordinierung-Programmoduls SES CON mit einem der Applikation-Programmodule AMA dient. Darüberhinaus ist das Applikationsverbindung-Programmodul CNC CON auch an der Nachladung von Daten aus peripheren Speichern über das Dateiverwaltung-Programmodul FILE CON beteiligt.

Zumindest ein großer Teil der Programmodule aus allen drei Taskstrukturen DH, LDU PD, LDU VD hat über definierte Datenbasis-Zugriffsroutinen DBAR Zugriff auf eine Datenbasis DB des Kommunikationssystems. Der Zugang der einzelnen Programmodule während des Ablaufs betriebstechnischer Vorgänge erfolgt in einer Transportebene eines Multitasking-Betriebssystems eines zentralen - nicht dargestellten - Kommunikationsrechners, der durch eine Mehrprozessorkonfiguration realisiert ist.

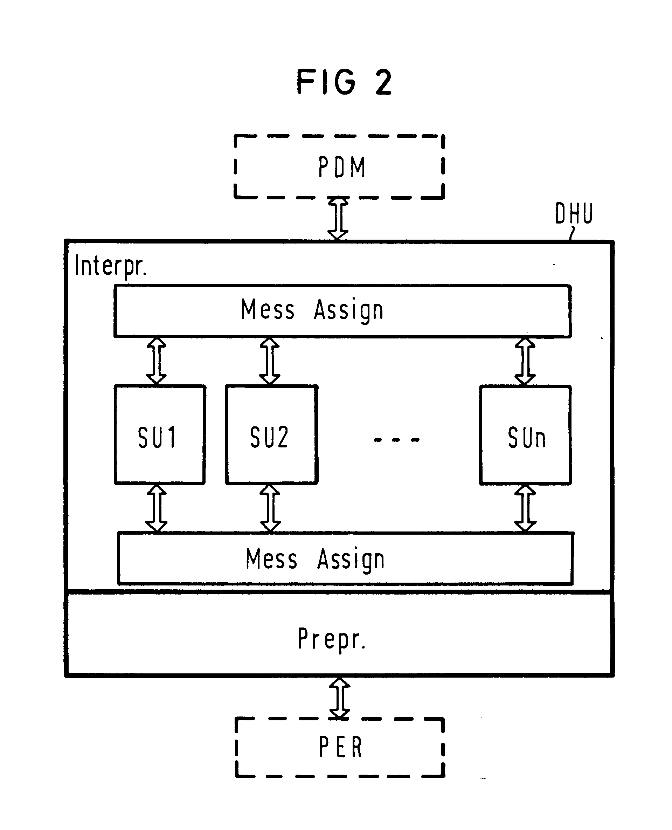

In der Fig. 2 ist die prinzipielle Organisations- und Steuerstruktur eines Leitungstechnik-Programmoduls DHU dargestellt. Im wesentlichen umfaßt diese Organisations- und Steuerstruktur eine Bewertungs-Programmebene Interpr und eine Vorverarbeitungs-Programmebene Prepr. In der Vorverarbeitungs-Programmebene Prepr werden von der Periphere PER stammende Anreize nach individuellen Leitungskriterien bewertet und in einer entsprechend aufbereiteten Form an die Bewertungs-Programmebene Interpr abgegeben. Darüberhinaus dient die Vorverarbeitungs-Programmebene Prepr zur Umsetzung logischer Meldungen, die über den Softwarebus PDM an das Leitungstechnik-Programmodul DHU übertragen werden, in Einstelldaten für in der Peripherie PER befindliche Geräte. Die an das Leitungstechnik-Programmodul DHU übergebenen Meldungen können dabei auch vor einer Bearbeitung in der Vorverarbeitungs-Programmebene Prepr in der Bewertungs-Programmebene Interpr zusätzlich bewertet und umgesetzt werden. Im wesentlichen dient die Bewertungs-Programmebene Interpr jedoch der Umsetzung der von der Peripherie PER abgegebenen Anreize - teilweise nach vorheriger Behandlung in der Vorverarbeitungs-Programmebene Prepr - in logische Meldungen, wobei die Bildung dieser logischen Meldungen mittels systemspezifischer Parameter erfolgt, die zumindest zum Teil in der Datenbasis des Kommunikationssystems niedergelegt sind.

Die Bewertungs-Programmebene Interpr weist Teilprogrammodule SU1, SU2...SUn auf, die jeweils definierten Teilfunktionen der vom Leitungstechnik-Programmodul DHU durchführbaren Gesamtfunktion zugeordnet sind. Im vorliegenden Beispiel sind die Teilprogrammodule SU1, SU2 jeweils vermittlungstechnischen Teilfunktionen in der Steuerung des Signalisierungsverfahrens und der Benutzeroberfläche der Endgeräte der Peripherie PER zugeordnet, während das Teilprogrammodul SUn für den betriebstechnischen Informations- und Datenfluß der Endgeräteart vorgesehen ist, dem das Leitungstechnik-Geräteprogrammodul zugeordnet ist. Das Teilprogrammodul SUn ist demgemäß bezüglich seiner Funktion und seiner Stellung in der gesamten Organisations- und Steuerstruktur des Kommunikationssystems mit dem betriebstechnischen Geräteprogrammodul für digitale Fernsprechgeräte AMS der Darstellung gemäß Fig. 1 gleichzusetzen.

Die Zuweisung der Anreize bzw. Meldungen vom Softwarebus PDM bzw. von der Peripherie PER an die einzelnen Teilprogrammodule SU1, SU2...SUn erfolgt mittels eines entsprechend ausgestalteten Zuordnungsprogramms Mess Assign (Message Assignment) in der Bewertungs-Programmebene Interpr.

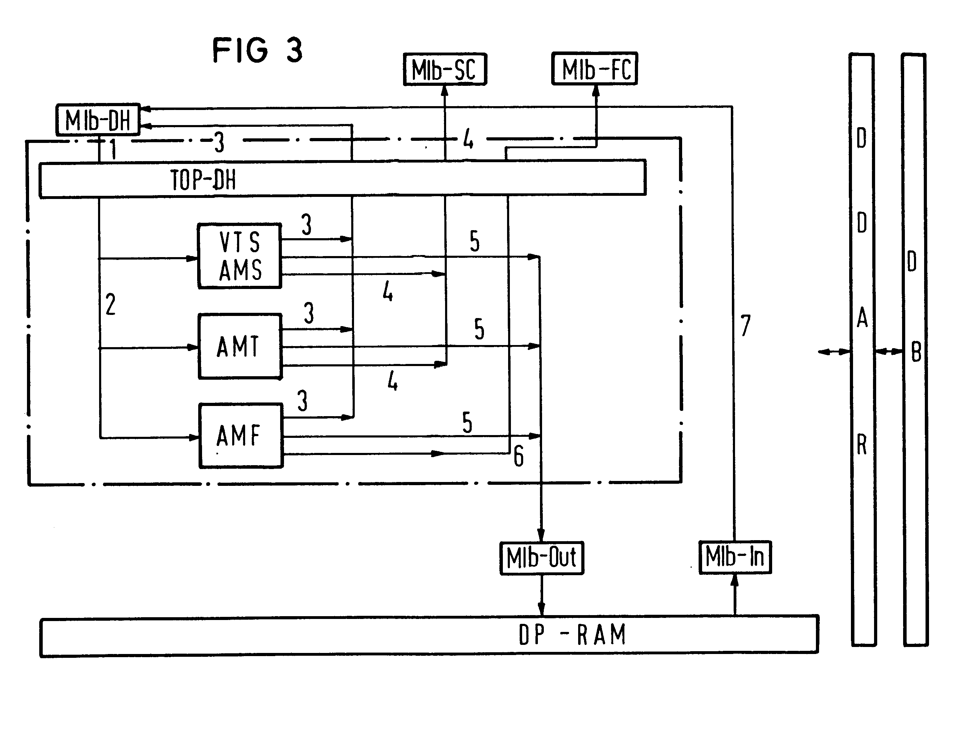

Die Fig. 3 zeigt die Leitungstechnik-Strukturebene in ihrer Systemumgebung. Die Leitungstechnik-Strukturebene wird im wesentlichen durch eine Leitungstechnik-Task DH-T gebildet, in der Betriebstechnik-Geräteprogrammodule AMF, AMT, AMS einem Leitungstechnik-Taskorganisationsprogramm TOP-DH hierarchisch untergeordnet sind. Das Betriebstechnik-Geräteprogrammodul AMT ist einem Betriebsterminal und das Betriebstechnik-Geräteprogrammmodul AMF einem Peripheriespeicher zugeordnet. Das Betriebstechnik-Geräteprogrammodul AMS stellt ein den betriebstechnischen Aufgaben zugeordnetes Teilmodul eines Geräteprogrammmoduls dar, das durch ein den vermittlungstechnischen Aufgaben zugeordnetes weiteres Teilmodul VTS ergänzt ist. Beide Teilmodule AMS, VTS sind einem digitalen Fernsprechgerät der Peripherie zugeordnet.

In Richtung auf die Peripherie des Kommunikationssystems arbeitet die Leitungstechnik-Task DH-T mit einem Speicher DP-RAM eines Eingabe/Ausgabeprozessors zusammen. Die Übermittlung von Anreizen an die Leitungstechnik-Task DH-T bzw. von Einstelldaten an die peripheren Geräte erfolgt über mailboxartig betriebene Übergabespeicher Mlb-In, Mlb-Out, die als integraler Bestandteil der Transportebene für Anreize und Einstelldaten aufzufassen sind. Die Transportebene ist ergänzt durch einen mailboxartig betriebenen Eingabe- und Ausgabespeicher Mlb-DH, über den von der Leitungstechnik-Task DH-T Anreize vom Übergabespeicher Mlb-In und von der nicht dargestellten betriebstechnischen Koordinierung-Taskstrukturebene aufgenommen werden, wobei die von der Leitungstechnik-Task DH-T erzeugten und für die betriebstechnische Koordinierung-Taskstrukturebene bestimmten Meldungen an einen Eingabe- und Ausgabespeicher Mlb-SC (für das Koordinierung-Programmodul) bzw. an einen Eingabe- und Ausgabespeicher Mlb-FC (für das Dateiverwaltung-Programmodul) abgegeben werden.

Alle drei Betriebstechnik-Geräteprogrammodule AMF, AMT, AMS haben über die Datenbasis-Zugriffsroutinen Zugriff zur Datenbasis des Kommunikationssystems. Die durch Einflußpfeile symbolisch angedeuteten Schnittstellen innerhalb der Leitungstechnik-Taskstrukturebene haben im einzelnen folgende Bedeutung:

1: Anstehende Meldung von der betriebstechnischen Koordinierung-Strukturebene zur Leitungstechnik-Task DH-T.

2: Typspezifischer Programmansprung mit Schnittstellenversorgung durch das Leitungstechnik-Taskorganisationsprogramm TOP-DH aufgrund der angesprochenen Endgeräteart.

3: Meldungsschnittstelle innerhalb des gleichen Typs von Geräteprogrammodul.

4: Meldungsschnittstelle zur betriebstechnischen Koordinierung-Strukturebene.

5: Schnittstelle über den Speicher DP-RAM zur Peripherietechnik.

6: Meldungsschnittstelle für die betriebstechnische Koordinierung-Strukturebene (für das Dateiverwaltung-Programmodul).

7: Schnittstelle über den Speicher DP-RAM von der Peripherietechnik, z. B. zur Aufnahme bewerteter Ergebnisse von Abfrageprozessen der peripheren Endgeräte. Zielspeicher ist der mailboxartig betriebene Eingabe- und Ausgabespeicher Mlb-DH.

Die Ansteuerung und Verwaltung, z. B. zum Abspeichern von Gerätespeicheradressen, der Aufruf von Transportprozeduren für den Eingabe- und Ausgabespeicher Mlb-DH sowie die zentralisierte Freigabe der Verbindungsspeicher erfolgen jeweils durch das Leitungstechnik-Taskorganisationsprogramm TOP-DH.

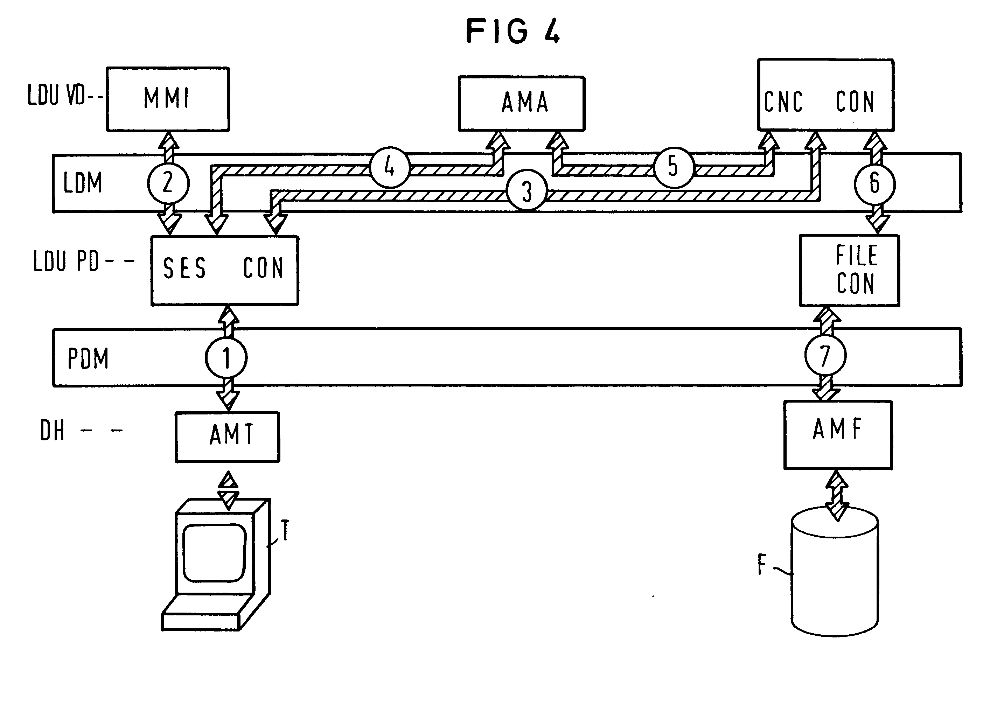

Anhand der Fig. 4, in der die wesentlichen Strukturbestandteile des Kommunikationssystem gemäß Fig. 1 noch einmal dargestellt sind, wird die Durchführung eines als Regelfall anzusehenden betriebstechnischen Auftrages über ein an das Kommunikationssystem angeschlossenes Betriebstechnik-Terminal T beschrieben.

Die Eingaben am Terminal T werden im Betriebstechnik-Geräteprogrammodul AMT in der Leitungstechnik-Taskstrukturebene DH gesammelt und nach Erhalt eines Sendekriteriums über den Programmbus PDM der Programm-Busstruktur PDM, LDM an das Koordinierung-Programmodul SES CON in der betriebstechnischen Koordinierung-Taskstrukturebene LDU PD weitergeleitet. Diese Meldungsübertragung erfolgt über die Schnittstelle "1" im virtuellen Terminalprotokoll.

Die Daten werden dann von dem betriebstechnischen Koordinierung-Programmodul SES CON über den Programmbus LDM der Programm-Busstruktur PDM, LDM - Schnittstelle "2¨ - an das Textprozessor-Programmodul MMI übertragen. Das Textprozessor-Programmodul MMI ermittelt aus den übertragenen Daten die gewünschte Applikation und gibt entspechende Informationen über die Schnittstelle "2" an das Koordinierung-Programmodul ab. Das Koordinierung-Programmodul SES CON gibt Informationen über die gewünschten Applikation-Programmodule AMA über die Schnittstelle "3" an das Applikationsverbindung-Programmodul CNC CON, das anschließend die für die weitere Kommandobearbeitung benötigten applikationsspezifischen Dateitabellen über die Schnittstelle "3" zur Verfügung stellt.

Das Textprozessor-Programmodul MMI, an das die mit Hilfe der applikationsspezifischen Tabellen erzeugten Kommandos über die Schnittstelle "2" geliefert werden, setzt mit diesen Kommandos die Prüfvorgänge fort und übergibt an das Koordinierung-Programmodul SES CON die aus dem Kommando konvertierten Daten. Über die Schnittstelle "3" übermittelt das Koordinierung-Programmodul SES CON einen Verbindungswunsch mit bestimmten Applikation-Programmodulen AMA über die Schnittstelle "3". Das Applikationsverbindung-Programmodul CNC CON stellt über die Schnittstelle "5" zu den Applikation-Programmodulen AMA eine Verbindung des gewünschten Applikation-Programmoduls AMA mit dem Koordinierung-ProgrammodulSES CON her; das Koordinierung-Programmodul SES CON leitet über die Schnittstelle "4" die Arbeitsauftragsdaten im virtuellen Applikationsprotokoll an das Applikation-Programmodul AMA weiter.

Nach programmtechnischer Durchführung des Arbeitsauftrages meldet das Applikation-Programmodul AMA das entsprechende Prozedurenresultat im virtuellen Applikationsprotokoll wiederum über die Schnittstelle "4" an das Koordinierung-Programmodul CS CON, das diese Daten über die Schnittstelle "2" wiederum an das Textprozessor-Programmodul MMI zur Konvertierung der Daten vom virtuellen Applikationsprotokoll in das virtuelle Terminalprotokoll übergibt. Das über die Schnittstelle "2" an das Koordinierung-Programmodul SES CON übermittelte Konvertierungsergebnis wird von diesem über die Schnittstelle "1" an das Betriebstechnik-Geräteprogrammodul AMT und von diesem an das Terminal T übertragen.

Für den Fall, daß in der betriebstechnischen Applikation-Taskstrukturebene LDU VD bestimmte Applikationen nicht resident sind, dient das Applikationsverbindung-Programmodul CNC CON zum Nachladen entsprechender auf peripheren Speichermedien F gehaltenen Daten über ein entsprechendes Geräteprogrammodul AMF in der Leitungstechnik-Taskstrukturebene DH, über die Schnittstelle "7" und das Dateiverwaltung-Geräteprogrammodul FILE CON bzw. die Schnittstelle "6" des Softwarebus LDM.

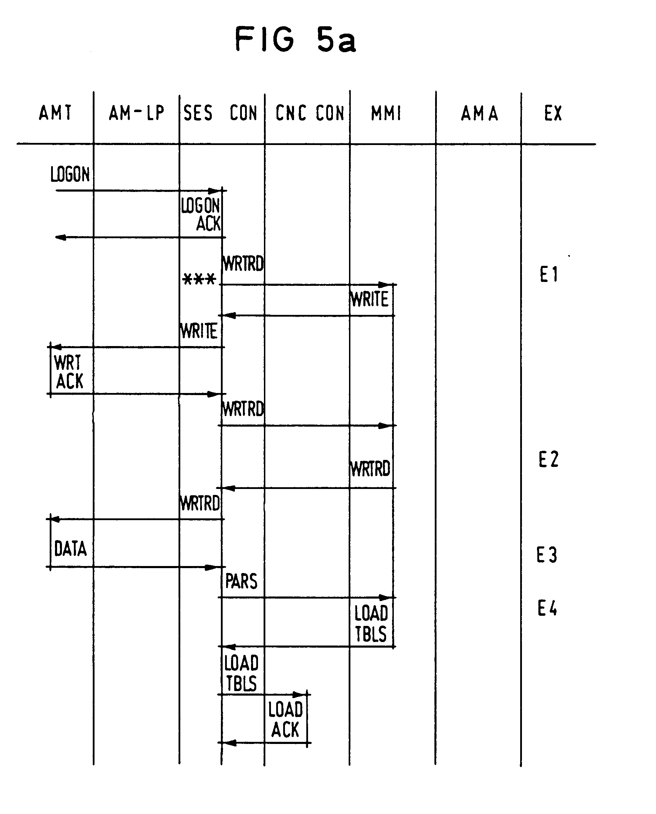

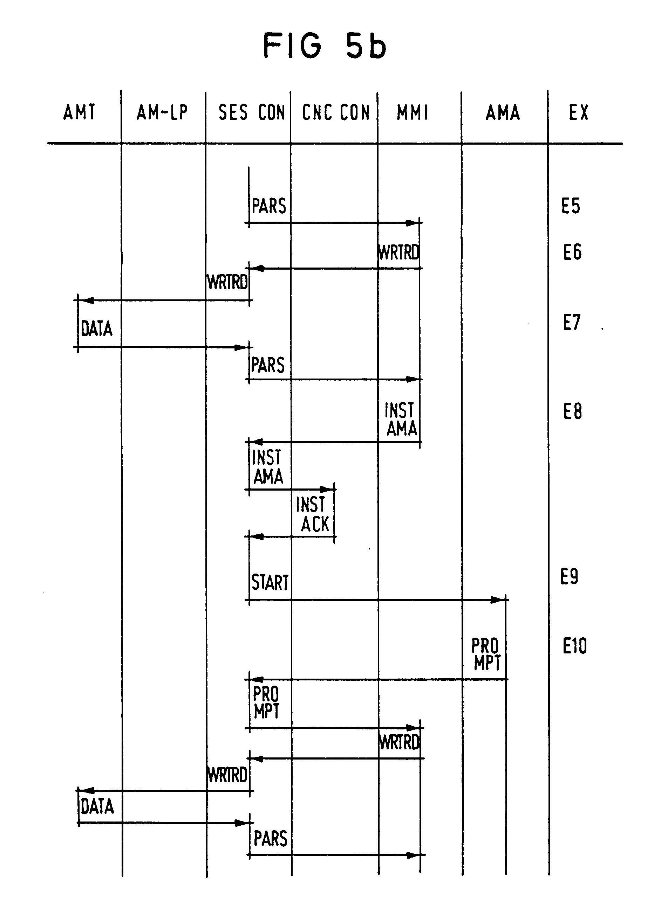

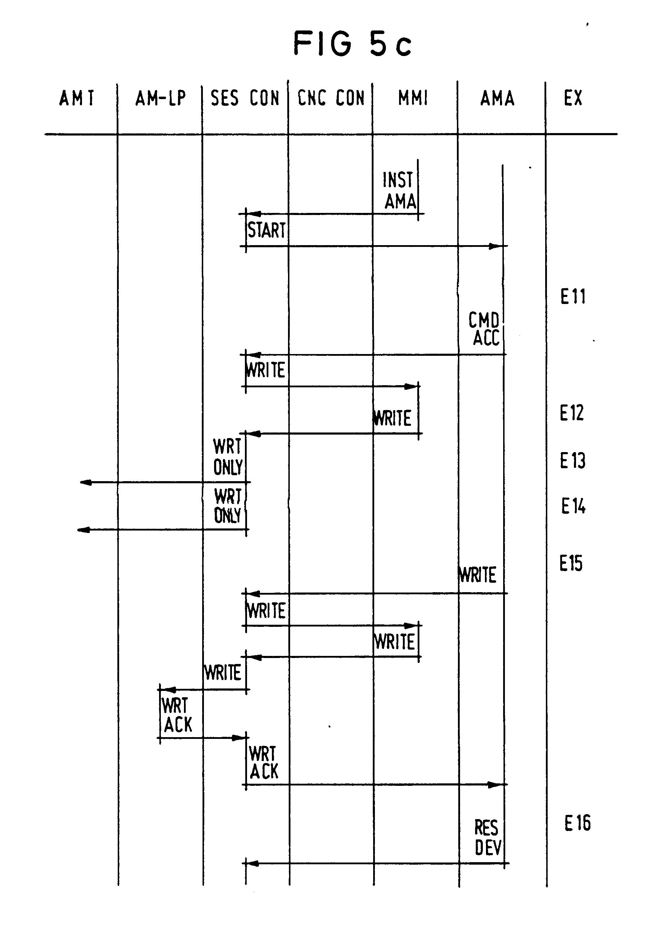

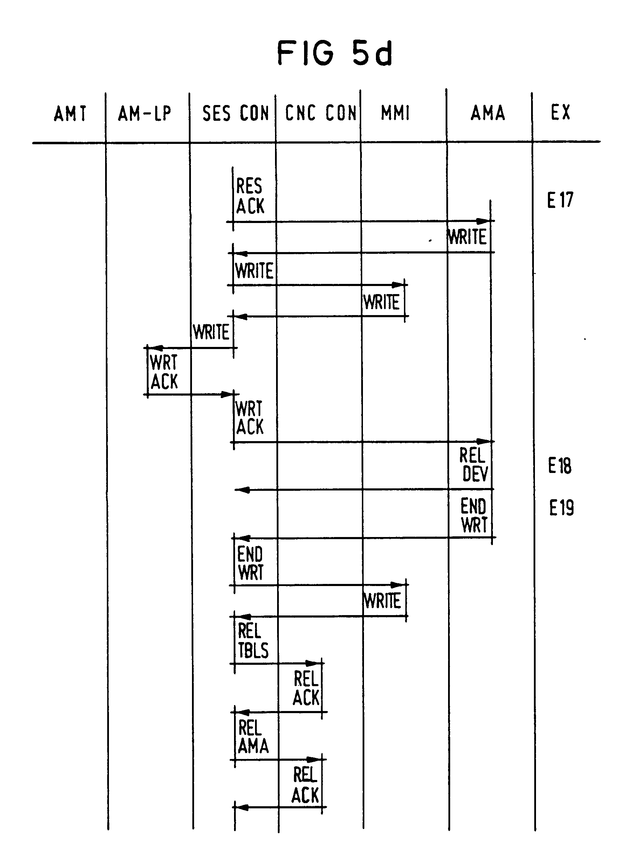

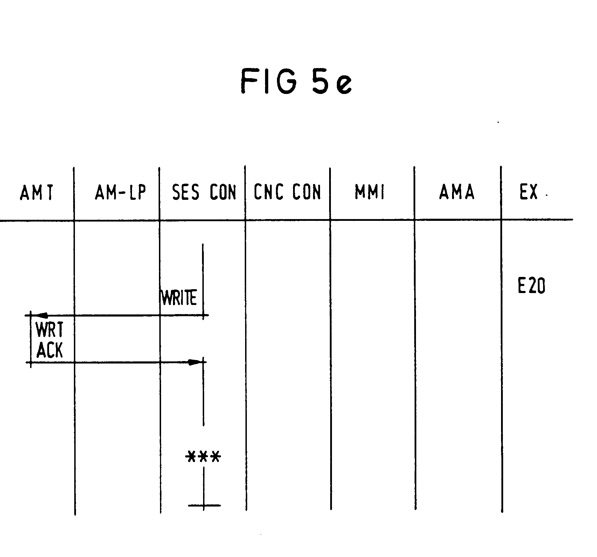

Der Meldungsfluß über die Schnittstellen "1" bis "5" ist in den Fig. 5a, 5b, 5c, 5d, 5e dargestellt. Die über die Schnittstellen "1" bis "5" übermittelten Typen von Meldungen sind hinsichtlich ihrer Bedeutung im folgenden beschrieben; die chronologische Abfolge dieser unterschiedlichen Meldungstypen ist den Fig. 5a, 5b, 5c, 5d, 5e zu entnehmen.

1. Schnittstelle "2" zwischen dem Koordinierung-Programmodul SES CON und dem Textprozessor-Programmodul MMI

Die Daten werden im Datenprotokoll MMIP (Man-Machine-Interpreting-Protokoll) übertragen. Dieses Protokoll sieht für die zu übertragenden Daten drei aufeinanderfolgende Datenfelder - Systemfeld, Sessionsfeld, MMI-Feld - vor. Über diese Schnittstelle werden folgende Aktivitäten abgewickelt:

- Prüfung von betriebstechnischen Eingaben an den Endgeräten und ggf. Aufforderungen zur Eingabekorrektur
- Konvertierung des virtuellen Terminalprotokolls in das virtuelle Applikationsprotokoll und umgekehrt
- Einleitung der Installierung von Applikation-Programmodulen und des Ladens von Datentabellen
- Initialisierung des Textprozessor-Programmoduls
- Ausgabe von Informationen über Fehlen von Daten und Programmresourcen im Textprozessor-Programmodul

1. 1. Meldungen vom Koordinierung-Programmodul SES CON an die Leitungstechnik-Taskstrukturebene DH

LOGON ACK -
Quittung auf die Meldung "LOGON" (Starten einer betriebstechnischen Session) Diese Quittung wird gemeinsam mit der Mitteilung der Session-Nummer an das zugehörige Betriebstechnik-Geräteprogrammodul übergeben.
WRITE -
Ausgabe von Daten zum Betriebstechnik-Endgerät; Quittung ist erforderlich
WRT ONLY -
Ausgabe von Daten an ein Betriebstechnik-, z. B. Bestätigung des Startes einer Session und Übergabe von Applikations-Datenkopfteiltexten; es ist keine Quittung erforderlich
WRT RD -

Ausgabe von Daten zum Betriebstechnik-Endgerät mit anschließender Aufforderung zu weiteren Eingaben.

1. 2. Meldungen von der Leitungstechnik-Taskstrukturebene DH an das Koordinierung-Programmodul SES CON

| | |
|---|---|
| DATA - | Datentransfer von Eingabedaten |
| LOGON - | Aufforderung zum Start einer betriebstechnischen Session; Quittung (LOGON ACK) ist erforderlich |
| WRT ACK - | Quittung auf die Meldung WRITE; ggf. Anforderungen nach nachfolgenden Auftragstexten |

2. 1. Meldungen vom Textprozessor-Programmodul MMI an das Koordinierung-Programmodul SES CON

| | |
|---|---|
| INST AMA - | Aufforderung für die Installierung eines bestimmten Applikation-Programmoduls und anschließende Übertragung von Instruktionen |
| LOAD TBLS - | Aufforderung zum Laden applikationsspezifischer und sprachspezifischer Texttabellen und applikationsspezifischer Parametertabellen |
| WRITE - | Ausgabe von generellen Hinweisinformationen zum Betriebstechnik-Terminal |
| WRT RD - | Ausgabe von generellen Hinweisinformationen an das Terminal mit nachfolgender Möglichkeit von Neueingaben |

2. 2. Meldungen vom Koordinierung-Programmodul SES CON zum Textprozessor-Programmodul MMI

| | |
|---|---|
| END WRT - | Aufbereitung eines Prozedurenresultates eines Applikation-Programmoduls in Daten im virtuellen Terminalprotokoll |
| PARS - | Übertragung von Eingabedaten im virtuellen Terminalprotokoll zur Überprüfung |
| PROMPT - | Anforderung eines neuen Parameters oder Korrektur eines bisherigen Parameters nach Angabe eines Applikation-Programmoduls |
| WRT RD - | Aufforderung zur Ausgabe von Eingabemasken |

3. 1. Meldungen vom Applikationsverbindung-Programmodul CNC CON zum Koordinierung-Programmodul SES CON

| | |
|---|---|
| INST ACK - | Quittung auf die Meldung "INST AMA" (Aufforderung zum Laden eines Applikationscodes bzw. zum Starten einer Task) |
| LOAD ACK - | Quittung für die Meldung "LOAD TBLS" (Tabellen geladen) |
| REL ACK - | Bestätigung für die Bereitstellung von Tabellen oder Applikationscodes |

3. 2. Meldungen vom Koordinierung-Programmodul SES CON zum Applikationsverbindung-Programmodul CNC CON

| | |
|---|---|
| INST AMA - | Aufforderung zum Laden des Applikationscodes und Starten einer Task |
| LOAD TBLS - | Aufforderung zum Laden von Text- und Parametertabellen |
| REL AMA - | Bedingte Freigabe eines Applikationscodes |

4. 1. Meldungen vom Applikation-Programmodul AMA zum Koordinierung-Programmodul SES CON

| | |
|---|---|
| CND ACC - | Ausgabe einer Bestätigung für den Beginn der applikationstechnischen Bearbeitung eines betriebstechnischen Auftrages an das Eingabegerät |
| END WRT - | Ausgabe von Prozedurenresultaten an das Eingabegerät |
| PROMPT - | Anforderung nach einem neuen Parameter oder nach einer Parameterkorrektur nach Angabe eines Applikation-Programmoduls |
| RES DEV - | Reservierung eines Ausgabegerätes für kontinuierliche Ausgabe |
| WRITE- | Datenausgabe zum Eingabegerät |

4. 2. Meldungen vom Koordinierung-Programmodul SES CON zum Applikation-Programmodul AMA

| | |
|---|---|
| RES ACK - | Quittung für die Meldung "RES DEV" |
| START - | Transfer eines konvertierten Eingabekommandos |
| WRT ACK - | Quittung für die Meldungen "WRITE" und "WRT ONLY" |

In den Fig. 5a, 5b, 5c, 5d, 5e ist zusätzlich der Meldungsfluß von und zu einem betriebstechnischen Drucker dargestellt, dem ein betriebstechnisches Geräteprogrammodul AM-LP zugeordnet ist.

Die Darstellung des Meldungsflusses in den Fig. 5a, 5b, 5c, 5d, 5e ist ergänzt durch Bemerkungen mit den fortlaufenden Bezeichnungen E1, E2...E18. Diese Bemerkungen werden im folgenden wiedergegeben:

E1: Anzeige der Bezeichnung der gestarteten Session

E2: letzter Teil der Eingabeaufforderung

E3: Eingabe am Betriebstechnik-Endgerät

E4: Überprüfung des Datenkopfteils der Eingabedaten

E5: Befehlstest

E6: Aufforderungen zu Eingabekorrekturen

E7: Eingabe am Betriebstechnik-Endgerät

E8: Mitteilung, daß Eingabedaten syntaxgerecht sind

E9: Parametertransfer zu einem Applikation-Programmodul

E10: Start der Parameterüberprüfung im Applikation-Programmodul

E11: Beendigung der Parameterüberprüfung

E12: Ausgabeanweisung an das Textprozessor-Programmodul

E13: Ausgabeanweisung für das Geräteprogrammmodul

E14: Start der Anzeige von Applikationen

E15: Ausgangsmeldungen an den Drucker

E16: Beginn des kontinuierlichen Druckens

E17: Quittung über erfolgreiche Reservierung

E18: Beendigung der Reservierung

E19: Anzeige der Prozedurenresultate

E20: Bericht über vollständige Ausführung der applikationstechnischen Aufgabe

Mit Abgabe der zu E20 gehörenden Meldung "WRT ACK" erfolgt eine neue Installierung des Programmablaufes bei * * *.

**Patentansprüche**

1. Modular strukturiertes digitales Kommunikationssystem zur Verbindung von Endgeräten untereinander und mit insbesondere öffentlichen Netzen mit einem zentralen Systemrechner mit einer Systemdatenbasis (DB) und zumindest einem Multitasking-Betriebssystem
   - zur Verwaltung einer Leitungstechnik-Taskstruktur (DH) mit endgeräteartenspezifischen Betriebstechnik-Geräteprogrammmodulen (AMT, AMF, AMS) zum Generieren logischer Betriebstechnik-Meldungen aus an den Endgeräten und/oder Betriebstechnik-Endgeräten (T) vorgenommenen Eingaben und zur Abgabe von aus logischen Betriebstechnik-Meldungen gewonnenen geräteartspezifischen Einstelldaten für die Endgeräte und/oder Betriebstechnik-Endgeräte (T) und
   - zur Verwaltung einer einer Vermittlungstechnik-Taskstruktur hierarchisch gleichgestellten betriebstechnischen Koordinierung-Taskstruktur (LDU PD) mit einem einem Koordinierung-Taskorganisationsprogramm hierarchisch untergeordneten Koordinierung-Programmmodul (SES CON) zur Steuerung des betriebstechnischen Informations- und Datenflusses und
   - zur Verwaltung einer betriebstechnischen Applikation-Taskstruktur (LDU VD) mit wenigstens einem einem Applikation-Taskorganisationsprogramm hierarchisch untergeordneten Applikation-Programmmodul (AMA) zur Abwicklung applikationsorientierter Funktionen, z. B. Inbetriebnahme, Wartung, Fernbetriebstechnik
      - wobei zumindest einem Teil der Programmmodule (AMT...SES CON) jeweils individuell über definierte Datenbasiszugriffsroutinen (DBAR) die Datenbasis (DB) zugänglich ist,
      - das (Multitasking-Betriebssystem) eine Programm-Busstruktur (PDM, LDM) mit einem kommunikationsdienste- und endgeräteartenunabhängig definierten Übertragungsprotokoll - virtuelles Terminalprotokoll - für zwischen der Leitungstechnik-Taskstruktur (DH) und der Koordinierung-Taskstruktur (LDU PD) übertragene Meldungen und mit einem ebenfalls kommunikationsdienste- und endgeräteartenunabhängig definierten, eine zumindest annähernd steuerzeichenfreie, gedrängte Datenanordnung vorsehenden weiteren Übertragungsprotokoll - virtuelles Applikationsprotokoll - für innerhalb der Applikation-Taskstruktur (LDU VD) und zwischen dieser und der Koordinierung-Taskstruktur (LDU PD) übertragene Meldungen aufweist, und

   mit einem Textprozessor-Programmmodul (MMI) zur Konvertierung von Meldungen in einem der beiden Übertragungsprotokolle in Meldungen im jeweils anderen Übertragungsprotokoll.

2. Kommunikationssystem nach Anspruch 1, **dadurch gekennzeichnet,** daß das Textprozessor-Programmmodul (MMI) in die betriebstechnische Applikation-Taskstruktur (LDU VD) eingefügt ist.

3. Kommunikationssystem nach Anspruch 1 oder 2,
   **dadurch gekennzeichnet,**
   daß in die betriebstechnische Koordinierung-Taskstruktur (LDU PD) ein einem Dateiverwaltung-Taskorganisationsprogramm hierarchisch untergeordnetes Dateiverwaltung-Programmodul (FILE CON) zur Steuerung des Zugangs zu peripheren Dateien eingefügt ist.

4. Kommunikationssystem nach Anspruch 3,
   **dadurch gekennzeichnet,**
   daß in die Leitungstechnik-Taskstruktur (DH) ein Speicher-Programmodul (AMF) zur Steuerung von Such-, Lese- und Schreibaufträgen für die Dateien aufnehmende Speicher (F) eingefügt ist.

5. Kommunikationssystem nach Anspruch 4,
   **dadurch gekennzeichnet,**
   daß das Speicher-Programmodul (AMF) derart strukturiert ist, daß es Warteschlangen für vom Dateiverwaltung-Programmodul (FILE CON) initiierte Such-, Lese- und Schreibaufträge auf- und abbaut.

6. Kommunikationssystem nach einem der Ansprüche 1 bis 5,
   **dadurch gekennzeichnet,**
   daß das Koordinierung-Programmodul (SES CON) derart strukturiert ist, daß es in Abhängigkeit von der Art einer innerhalb eines betriebstechnischen Auftrages angesprochenen Applikation die Ansteuerung des entsprechenden Applikation-Programmoduls (AMA) einleitet.

7. Kommunikationssystem nach Anspruch 6,
   **dadurch gekennzeichnet,**
   daß das Koordinierung-Programmodul (SES CON) programmodulzugeordnete Speicherplätze zur Aufnahme von in einzelnen betriebstechnischen Sessionen übernommenen Daten verwaltet.

8. Kommunikationssystem nach Anspruch 6 oder 7,
   **dadurch gekennzeichnet,**
   daß das Koordinierung-Programmodul (SES CON) derart strukturiert ist, daß es Datenausgaben an Endgeräte und/oder Betriebstechnik-Endgeräte (T) unter Berücksichtigung von Prioritäten der Daten und/oder der Endgeräte bzw. Betriebstechnik-Endgeräte (T) abwickelt.

9. Kommunikationssystem nach einem der Ansprüche 6 bis 8,
   **dadurch gekennzeichnet,**

daß in die betriebstechnische Applikation-Taskstruktur (LDU VD) ein einem Applikationsverbindung-Taskorganisationsprogramm hierarchisch untergeordnetes Applikationsverbindung-Programmodul (CNC CON) zum Aufbau und zur Verwaltung der Verbindung des Koordinierung-Programmoduls (SES CON) mit einem der Applikation-Programmodule (AMA) eingefügt ist.

10. Kommunikationssystem nach Anspruch 9,
    **dadurch gekennzeichnet,**
    daß das Applikationsverbindung-Programmodul (CNC CON) derart strukturiert ist, daß es das Vorhandensein bestimmter Applikation-Programmodule (AMA) in der betriebstechnischen Applikation-Taskstruktur (LDU VD) prüft.

11. Kommunikationssystem nach Anspruch 9 oder 10 und den Ansprüchen 3 und 4,
    **dadurch gekennzeichnet,**
    daß das Applikationsverbindung-Programmodul (CNC CON) derart strukturiert ist, daß in der Applikation-Taskstruktur (LDU VD) nicht residente Applikation-Programmodule unter Einbeziehung des Dateiverwaltung-Programmoduls (FILE CON) und des Speicher-Programmoduls (AMF) aus peripheren Dateien in die Applikation-Taskstruktur (LDU VD) einladbar sind.

12. Kommunikationssystem nach einem der Ansprüche 1 bis 11,
    **dadurch gekennzeichnet,**
    daß in die betriebstechnische Applikation-Taskstruktur (LDU VD) ein Verkehrsdatenerfassung-Programmodul (TR COL) zur Erfassung teilnehmer- bzw. kommunikationsdienstbezogener Verbindungsinformationen eingefügt ist.

13. Kommunikationssystem nach Anspruch 12,
    **dadurch gekennzeichnet,**
    daß die Verbindungsinformationen von wenigstens einem in die Vermittlungstechnik-Taskstruktur eingefügten Vermittlungstechnik-Programmodul (CP) nach definierten Vermittlungsprozedurabschnitten in Form von Meldungen eines vermittlungstechnikspezifischen Meldungsprotokolls an das Verkehrsdatenerfassung-Programmodul (TR COL) übergeben werden.

14. Kommunikationssystem nach Anspruch 9,
    **dadurch gekennzeichnet,**
    daß ein betriebstechnischer Auftrag mittels Eingaben an dem Betriebstechnik-Endgerät (T) derart ausgeführt wird, daß nach Aufnahme der Eingabedaten durch das dem Betriebstechnik-Endgerät (T) zugeordnete Betriebstechnik-Geräteprogrammodul (AMT) und nachfolgendem Empfang eines über einen Programm-Bus (PDM) der Programm-Busstruktur (PDM LDM) übertragenen Sendekriteriums die Eingabedaten nach dem virtuellen Terminalprotokoll strukturiert über den Programm-Bus (PDM) an das Koordinierung-Programmodul (SES CON) weitergeleitet werden, das die Eingabedaten dem Textprozessor-Programmodul (MMI) zur Prüfung, welches Applikation-Programmodul (AMA) zur weiteren Bearbeitung benötigt wird, übergibt und eine vom Ergebnis dieser Prüfung abhängige Meldung an das Applikationsverbindung-Programmodul (CNC CON) im Sinne der Anforderung für die Auftragsbearbeitung benötigter applikationsspezifischer Tabellen abgibt.

15. Kommunikationssystem nach Anspruch 14,
**dadurch gekennzeichnet,**
daß das Koordinierung-Programmodul (SES CON) die vom Textprozessor-Programmodul (MMI) konvertierten Auftragsdaten aufnimmt und über eine vom Applikationsverbindung-Programmodul (CNC CON) aufgebaute Verbindung an das ausgewählte Applikation-Programmodul (AMA) abgibt, das nach Abarbeitung der applikationsspezifischen Prozeduren das Prozedurenresultat im virtuellen Applikationsprotokoll an das Koordinierung-Programmodul (SES CON) übergibt.

16. Kommunikationssystem nach Anspruch 1,
**dadurch gekennzeichnet,**
daß das Textprozessor-Programmodul (MMI) in ein vorzugsweise durch einen Personal Computer realisiertes Betriebstechnik-Endgerät eingefügt ist, in dem den einzelnen Applikationen immanente Datentabellen gespeichert sind, die durch ein funktionell wie das Koordinierung-Programmodul (SES CON) strukturiertes Systemprogramm des Betriebstechnik-Endgerätes in die Abarbeitung betriebstechnischer Aufträge einbezogen werden.

17. Kommunikationssystem nach Anspruch 16,
**dadurch gekennzeichnet,**
daß der verbleibende Datenverkehr zwischen dem Betriebstechnik-Endgerät und dem Koordinierung-Programmodul (SES CON), insbesondere zur Prüfung auftragstypischer Parameter gegen die Datenbasis (DB), gemäß dem virtuellen Applikationsprotokoll erfolgt.

18. Kommunikationssystem nach einem der Ansprüche 1 bis 17,
**dadurch gekennzeichnet,**
daß in den Meldungen im virtuellen Terminalprotokoll jeweils nur gegenüber einem einer vorgehenden Meldung zugrundeliegenden Zustand geänderte Daten übertragen werden.

19. Kommunikationssystem nach einem der Ansprüche 1 bis 18,
**dadurch gekennzeichnet,**
daß Meldungen im virtuellen Terminalprotokoll und im virtuellen Applikationsprotokoll derart aufgebaut sind, daß auf ein System-Datenkopfteil mit einer definierten Reihenfolge von Meldungsursprungs- und Meldungszieladressen ein betriebstechnikspezifischer Datenkopfteil mit einer für die beiden Protokolle unterschiedlichen Protokollidentifizierungsinformation, einer Bezeichnung einer Auftragssession, zu der die jeweilige Meldung gehört und einer das für die Abarbeitung der Auftragssession notwendige Applikation-Programmodul (AMA) bezeichnenden Zieladresse.

20. Kommunikationssystem nach einem der Ansprüche 1 bis 19,
**dadurch gekennzeichnet,**
daß die den Endgeräten und die den Betriebstechnik-Endgeräten (T) zugeordneten Betriebstechnik-Geräteprogrammodule (AMS, AMF) eine von den Endgeräten bzw. Betriebstechnik-Endgeräten (T) abgegebene Anreize nach individuellen Leitungskriterien bewertende und Meldungen aus der betriebstechnischen Taskstruktur (LDU PD) in Einstelldaten für die Endgeräte bzw. Betriebstechnik-Endgeräte (T) umsetzende Vorverarbeitungs-Programmebene (Prepr) und eine die Anreize mittels systemspezifischer Parameter in protokollgerechte Meldungen umsetzende Bewertungs-Programmebene (Interpr) aufweisen.

21. Kommunikationssystem nach Anspruch 20,
**dadurch gekennzeichnet,**
daß zumindest eins der den Endgeräten zugeordneten Betriebstechnik-Geräteprogrammodule (AMS) ein Teilmodul eines ein weiteres Teilmodul (VTS) für die Verarbeitung vermittlungstechnischer Anreize und Meldungen aufweisenden endgeräteartspezifischen Geräteprogrammoduls darstellt und daß ein in der Bewertungs-Programmebene (Interpr) residentes Zuordnungsprogramm (Mess Assign) jeweils funktionsabhängig Meldungen und Informationen auf die beiden Teilmodule (AMS, VTS) verzweigt.

**22.** Kommunikationssystem nach Anspruch 21,
**dadurch gekennzeichnet,**
daß das Endgerät, insbesondere Fernsprechendgerät, eine alpha-numerische Anzeigeeinrichtung, insbesondere ein Display, mit gegenüber einem Bildschirmgerät begrenzter Anzeige-Kapazität aufweist und daß das der Betriebstechnik zugeordnete Teilmodul (AMS) derart ausgelegt ist, daß die Übermittlung von an der alpha-numerischen Anzeigeeinrichtung anzuzeigenden Texten feldweise mit einer an die Anzeigekapazität angepaßten Feldgröße erfolgt.

**23.** Kommunikationssystem nach einem der Ansprüche 1 bis 22,
**dadurch gekennzeichnet,**
daß ein von einem Eingabe/Ausgabeprozessor (IOP) verwalteter Peripheriespeicher (DP-RAM) jeweils einen jeweils unabhängig voneinander steuerbaren Eingabeanschluß für in der Leitungstechnik-Task (DH) gewonnene Meldungen für die Endgeräte bzw. Betriebstechnik-Endgeräte (T) und Ausgabeanschluß für aus Anreizen der Endgeräte bzw. Betriebstechnik-Endgeräte (T) gewonnene Meldungen aufweist.

**24.** Kommunikationssystem nach Anspruch 23,
**dadurch gekennzeichnet,**
daß sowohl dem Eingabeanschluß als auch dem Ausgabeanschluß jeweils ein mailboxartig betriebener Übergabespeicher (Mlb-In; Mlb-Out) zugeordnet ist.

**25.** Kommunikationssystem nach Anspruch 24,
**dadurch gekennzeichnet,**
daß die Betriebstechnik-Geräteprogrammodule (AMT, AMS) der Leitungstechnik-Task (DH) mit dem Übergabespeicher (Mlb-Out) für die an die Endgeräte bzw. Betriebstechnik-Endgeräte (T) auszugebenden Meldungen verknüpft sind.

**26.** Kommunikationssystem nach den Ansprüchen 24 oder 25,
**dadurch gekennzeichnet,**
daß die Übermittlung der von den Endgeräten (S) bzw. Betriebstechnik-Endgeräten(T) initiierten Anreize oder Informationen von dem zugeordneten Übergabespeicher (Mlb-In) an den Eingabe-und Ausgabespeicher (Mlb-DH) der Leitungstechnik-Task (DH) und/oder von den Geräteprogrammodulen (AMT, AMS) an den Übergabespeicher (Mlb-Out) für die an die Endgeräte bzw. Betriebstechnik-Endgeräte (T) auszugebenden Meldungen in einer Transportschicht eines Meldungsprotokolls des Multitasking-Betriebssystems erfolgt.

**27.** Kommunikationssystem nach einem der Ansprüche 23 bis 26,
**dadurch gekennzeichnet,**
daß der Eingabe/Ausgabeprozessor (IOP) mit einem mit dem Multitasking-Betriebssystem identischen Betriebssystem ausgestattet ist.

**28.** Kommunikationssystem nach Anspruch 1,
**dadurch gekennzeichnet,**
daß der Leitungstechnik-Taskstruktur (DH), der betriebstechnischen Koordinierungs-Taskstruktur (LDU PD) und der betriebstechnischen Applikations-Taskstruktur (LDU VD) jeweils wenigstens ein mailboxartig betriebener Eingabe- und Ausgabespeicher (Mlb-DH, Mlb-LDU PD) zugeordnet ist.

**Claims**

**1.** Digital communications system, of modular structure, for the connection of terminal equipment to one another and, preferably, to public networks, having a central system computer with a system database (DB) and at least one multitasking operating system

- for the administration of a line technology task structure (DH) having operating technology equipment program modules (AMT, AMF, AMS), which are specific to the types of terminal equipment, for generating logic operating technology messages from inputs received at the terminal equipment and/or operating technology terminal equipment (T) and for outputting setting data, which are specific to the type of equipment and are obtained from logic operating technology messages, for the terminal equipment and/or operating technology terminal equipment (T) and

- for administering an operations-related coordinating task structure (LDU PD), which is hierarchically equivalent to a switching technology task structure, having a coordinating program module (SES CON), which is hierarchically subordinate to a coordinating task organisation program, for controlling the operations-related information and data flow and

- for administering an operations-related application task structure (LDU VD) having at least one application program module (AMA) which is hierarchically subordinate to an application task organisation program, for carrying out application-oriented functions, for example commissioning, servicing and remote control technology

- the database (DB) being accessible to at least a proportion of the program modules (AMT...SES CON), in each case individually via defined database access routines (DBAR),
- the (multitasking operating system) having a program bus structure (PDM, LDM) with a transmission protocol - virtual terminal protocol - which is defined independently of the communications services and types of terminal equipment, for messages transmitted between the line technology task structure (DH) and the coordinating task structure (LDU PD) and with a further transmission protocol - virtual application protocol - which is likewise defined independently of the communications services and types of terminal equipment and provides a compact data arrangement which is at least approximately free of control characters, for messages transmitted within the application task structure (LDU VD) and between said task structure and the coordinating task structure (LDU PD), and

having a text processor program module (MMI) for the conversion of messages in one of the two transmission protocols into messages in the respective other transmission protocol.

2. Communications system according to Claim 1, characterised in that the text processor program module (MMI) is inserted in the operations-related application task structure (LDU VD).

3. Communications system according to Claim 1 or 2, characterised in that a data file administration program module (FILE CON), which is hierarchically subordinate to a data file administration task organisation program, is inserted in the operations-related coordinating task structure (LDU PD) for controlling the access to peripheral data files.

4. Communications system according to Claim 3, characterised in that a memory program module (AMF) is inserted in the line technology task structure (DH) for controlling search, read and write tasks for the memory (F) holding the data files.

5. Communications system according to Claim 4, characterised in that the memory program module (AMF) is structured in such a manner that it constructs and dismantles waiting lists for search, read and write tasks initiated by the data file administration program module (FILE CON).

6. Communications system according to one of Claims 1 to 5, characterised in that the coordinating program module (SES CON) is structured in such a manner that it initiates the selection of the appropriate application program module (AMA) as a function of the type of application addressed within an operations-related task.

7. Communications system according to Claim 6, characterised in that the coordinating program module (SES CON) administers memory spaces, allocated to the program module, for holding data transferred in individual operations-related sessions.

8. Communications system according to Claim 6 or 7, characterised in that the coordinating program module (SES CON) is structured in such a manner that it carries out data tasks on terminal equipment and/or operating technology terminal equipment (T) taking into account priorities of the data and/or of the terminal equipment or operating technology terminal equipment (T).

9. Communications system according to one of Claims 6 to 8, characterised in that an application connection program module (CNC CON), which is hierarchically subordinate to an application connection task organisation program, is inserted in the operations-related application task structure (LDU VD) for setting up and for administering the connection of the coordinating program module (SES CON) to one of the application program modules (AMA).

10. Communications system according to Claim 9, characterised in that the application connection program module (CNC CON) is structured in such a manner that it checks the presence of specific application program modules (AMA) in the operations-related application task structure (LDU VD).

11. Communications system according to Claim 9 or 10 and Claims 3 and 4, characterised in that the application connection program module (CNC CON) is structured in such a manner that application program modules which are not resident in the application task structure (LDU VD) including the data file administration module (FILE CON) and the memory program module (AMF) can be loaded from peripheral data files into the application task structure (LDU VD).

12. Communications system according to one of Claims 1 to 11, characterised in that a traffic data acquisition program module (TR COL) is inserted in the operations-related application task structure (LDU VD) for acquiring connection information related to the subscriber or communications service.

13. Communications system according to Claim 12, characterised in that the connection information from at least one switching technology program module (CP) inserted in the switching technology task structure is forwarded to the traffic data acquisition program module (TR COL), in accordance with defined switching procedure sections, in the form of messages in a message protocol which is specific to switching technology.

14. Communications system according to Claim 9, characterised in that an operations-related task is carried out by means of inputs to the operating technology terminal equipment (T) in such a manner that, following reception of the input data by the operating technology equipment program module (AMT) allocated to the operating technology terminal equipment (T), and subsequent receipt of a transmission criterion, transmitted via a program bus (PDM) of the program bus structure (PDM LDM), the input data are forwarded via the program bus (PDM) to the coordinating program module (SES CON), structured in accordance with the virtual terminal protocol, said coordinating program module transfers the input data to the text processor program module (MMI) in order to check which application program module (AMA) is required for further processing, and outputs a message which is dependent on the result of this check to the application connection program module (CNC CON) in the sense of the request for the application-specific tables which are required for processing the task.

15. Communications system according to Claim 14, characterised in that the coordinating program module (SES CON) receives the task data, converted by the text processor program module (MMI), and outputs said data via a connection set up by the application connection program module (CNC CON) to the selected application program module (AMA), which, after servicing the application-specific procedures, transfers the procedure result in the virtual application protocol to the coordinating program module (SES CON).

16. Communications system according to Claim 1, characterised in that the text processor program module (MMI) is inserted in an operating technology terminal equipment, preferably implemented by means of a personal computer, in which data tables associated with the individual applications are stored, which data tables are made use of in servicing the operations-related tasks by means of a system program of the operating technology terminal equipment which is structured like the coordinating program module (SES CON) in a functional manner.

17. Communications system according to Claim 16, characterised in that the remaining data traffic between the operating technology terminal equipment and the coordinating program module (SES CON), preferably for checking parameters which are typical of a task against the database (DB), takes place in accordance with the virtual application protocol.

18. Communications system according to one of Claims 1 to 17, characterised in that only data which are modified in comparison with a status forming the basis of a previous message are transmitted in each case in the messages in the virtual terminal protocol.

19. Communications system according to one of Claims 1 to 18, characterised in that messages in the virtual terminal protocol and in the virtual application protocol are constructed in such a manner that a system data header part, having a defined sequence of message originating addresses and message destination addresses is followed by an operations-related specific data header part having protocol identification information which is different for the two protocols, having a designation of a task session, to which the respective message belongs. and having a destination address indicating the application program module (AMA) which is necessary for servicing the task session.

20. Communications system according to one of Claims 1 to 19, characterised in that the operating technology equipment program modules (AMS, AMF) allocated to the terminal equipment and those allocated to the operating technology terminal equipment (T) have a preprocessing program level (Prepr) which assesses an alerting signal output by the terminal equipment or operating technology terminal equipment (T) in accordance with individual line criteria and converts messages from the operations-related task structure (LDU PD) into setting data for the terminal equipment or operating technology terminal equipment (T), and have an assessment program level (Interpr) which converts the alerting signal into messages in accordance with the protocol, by means of system-specific parameters.

21. Communications system according to Claim 20, characterised in that at least one of the operating technology equipment program modules (AMS) allocated to the terminal equipment represents a submodule of an equipment program module which is specific to the terminal equipment type and has a further submodule (VTS) for processing switching-related alerting signals and messages, and in that an allocation program (Mess Assign), resident in the assessment program level (Interpr), in each case branches functionally dependent messages and information to the two submodules (AMS, VTS).

22. Communications system according to Claim 21, characterised in that the terminal equipment, preferably telephone terminal equipment, has an alphanumeric indicating device, preferably a display, having an indicating capacity which is limited in comparison with a video screen, and in that the submodule (AMS) allocated to the operating technology is designed in such a manner that the transmission of texts to be displayed on the alphanumeric indicating device takes place field-by-field with a field size matched to the indicating capacity.

23. Communications system according to one of Claims 1 to 22, characterised in that a peripheral memory (DP-RAM), administered by an input/output processor (IOP), in each case has an input terminal, which input terminals can each be controlled independently of one another, for messages produced in the line technology task (DH) for the terminal equipment or operating technology terminal equipment (T), and an output terminal for messages produced from alerting signals of the terminal equipment or operating technology terminal equipment (T).

24. Communications system according to Claim 23, characterised in that a transfer memory (Mlb-In; Mlb-Out), operating like a mail box, is allocated in each case to both the input terminal and to the output terminal.

25. Communications system according to Claim 24, characterised in that the operating technology equipment program modules (AMT, AMS) of the line technology task (DH) are linked to the transfer memory (Mlb-Out) for the messages to be output to the terminal equipment or operating technology terminal equipment (T).

26. Communications system according to Claims 24 or 25, characterised in that the transmission of the alerting signals or information initiated by the terminal equipment (S) or operating technology terminal equipment (T) from the associated transfer memory (Mlb-In) to the input and output memory (Mlb-DH) of the line technology task (DH) and/or from the equipment program modules (AMT, AMS) to the transfer memory (Mlb-Out) for the messages to be output to the terminal equipment or operating technology terminal equipment (T), takes place in a transport layer of a message protocol of the multitasking operating system.

27. Communications system according to one of Claims 23 to 26, characterised in that the input/output processor (IOP) is equipped with an operating system which is identical to the multitasking operating system.

28. Communications system according to Claim 1, characterized in that in each case at least one input and output memory (Mlb-DH, Mlb-LDU PD), operating like a mail box, is allocated to the line technology task structure (DH), to the operations-related coordinating task structure (LDU PD) and to the operations-related application task structure (LDU VD).

**Revendications**

1. Système de communication numérique à structure modulaire, destiné à relier des terminaux entre eux et notamment à des réseaux publics, comportant un calculateur central du système possédant une base (DB) de données du système et au moins un système de fonctionnement multitâches,
    - pour gérer une structure de tâches de la technique des lignes (DH) comportant des modules de programmes d'appareils de la technique de service (AMT,AMF,AMS), spécifiques aux types de terminaux, pour la production de signalisations logiques de la technique de service à partir d'entrées réalisées dans les terminaux et/ou dans les terminaux de la technique de service (T) et pour la production de données de réglage obtenues à partir de signalisations logiques de la technique de service et spécifiques aux types d'appareils pour les terminaux et/ou les terminaux de la technique de service (T), et

- pour gérer une structure de tâches de coordination technique de service (LDU PD), positionnée au même rang hiérarchique qu'une structure de tâches de la technique de commutation au moyen d'un module de programme de coordination (SES CON) placé hiérarchiquement à un rang inférieur à un programme d'organisation de tâches de coordination pour la commande du flux d'informations et de données concernant la technique de service, et

- pour gérer une structure technique de service (LDU VD) de tâches d'application, à l'aide d'au moins un module de programme d'application (AMA) placé hiérarchiquement à un rang inférieur à un programme d'organisation de tâches d'application, pour l'exécution de fonctions, axées sur l'application, par exemple une mise en service, une maintenance, une technique de service à grande distance,

  - la base de données (DB) étant accessible à au moins une partie des modules de programmes (AMT...SES CON) respectivement individuellement par l'intermédiaire de sous-programmes définis (DBAR) d'accès à la base de données,

  - le système de service (système de service multitâches) comportant une structure de bus de programmes (PDM, LDM) comprenant un prototocole de transmission défini indépendamment des services de communication et des types de terminaux - un protocole virtuel de terminaux - pour des signalisations transmises entre la structure de tâches de la technique des lignes (DH) et la structure de tâches de coordination (LDU PD), et un autre protocole de transmission - protocole virtuel d'application - défini également indépendamment des services de communication et des types d'appareils terminaux et prévoyant un dispositif compact de traitement de données, au moins approximativement exempt de signaux de commande, pour les signalisations transmises à l'intérieur de la structure de tâches d'application (LDU VD) et entre cette structure et la structure de tâches de coordination (LDU PD),
et comportant un module de programme de processeur de textes (MMI) pour convertir des signalisations dans l'un des deux protocoles de transmission en des signalisations dans l'autre protocole respectif de transmission.

2. Système de communication suivant la revendication 1, caractérisé par le fait que le module de processeur de textes (MMI) est inséré dans la structure technique de service (LDU VD) de tâches d'application.

3. Système de communication suivant la revendication 1 ou 2, caractérisé par le fait que dans la structure de tâches de coordination (LDU PD) pour la technique de service est inséré un module de programme de gestion de fichiers (FILE CON) placés hiérarchiquement à un rang inférieur à un programme d'organisation de tâches de gestion de fichiers, pour la commande de l'accès à des fichiers périphériques.

4. Système de communication suivant la revendication 3, caractérisé par le fait que dans la structure de tâches de la technique des lignes (DH) est inséré un module de programme de mémoire (AMF) servant à commander des ordres de recherche, de lecture et d'enregistrement pour des mémoires (F) recevant les fichiers.

5. Système de communication suivant la revendication 4, caractérisé par le fait que le module de mémoire (AMF) est structuré de telle sorte qu'il établit et supprime des files d'attente pour des ordres de recherche, de lecture et d'enregistrement déclenchés par le module de programme de gestion de fichiers (FILE CON).

6. Système de communication suivant la revendication 1 à 5, caractérisé par le fait que le module de commutation (SES CON) est structuré de telle sorte qu'il déclenche la commande du module de programme d'application correspondant (AMA) en fonction du type d'une application qui répond pendant un ordre technique de service.

7. Système de communication suivant la revendication 6, caractérisé par le fait que le module de programme de coordination (SES CON) gère des places de mémoire, associées à des modules de programmes, pour la réception des données retransmises dans différentes sessions de techniques de service.

8. Système de communication suivant la revendication 6 ou 7, caractérisé par le fait que le module de programme de coordination (SES CON) est structuré de telle sorte qu'il existe des tâches de données dans des terminaux et/ou dans des terminaux techniques de service (T) en tenant compte de priorités des données et/ou des terminaux ou des terminaux techniques de service (T).

9. Système de communication suivant la revendication 6 à 8, caractérisé par le fait que dans la structure de tâches d'application (LDU VD) relative à la technique de service est inséré un module de programme de liaison d'application (CNC CON) placé hiérarchiquement à un rang inférieur au programme d'organisation de tâches de liaison d'application pour l'établissement et la gestion de la liaison du module de programme de coordination (SES CON) avec l'un des modules de programmes d'application (AMA).

10. Système de communication suivant la revendication 9, caractérisé par le fait que le module de programme de liaison d'application (CNC CON) est structuré de telle sorte qu'il contrôle la présence de modules de programmes d'application (AMA) déterminé, dans la structure de tâches d'application (LDU VD) de la technique de service.

11. Système de communication suivant la revendication 9 ou 10 et les revendications 3 et 4, caractérisé par le fait que le module de programmes de liaison d'application (CNC CON) est structuré de telle sorte que des modules de programmes d'application non résidants dans la structure de tâches d'application (LDU VD) peuvent être chargés à partir de fichiers périphériques dans la structure de tâches d'application (LDU VD), moyennant l'insertion du module de programmes de gestion de fichiers (FILE CON) et du module de programmes de mémoire (AMF).

12. Système de communication suivant l'une des revendications 1 à 11, caractérisé par le fait que dans la structure de tâches d'application (LDU VD) concernant la technique de service est inséré un module de programmes d'acquisition de données de trafic (TR COL) servant à détecter des informations de liaison rapportées à l'abonné ou au service de communication.

13. Système de communication suivant la revendication 12, caractérisé par le fait que les informations de liaison d'au moins un module de programmes technique de commutation (CP) inséré dans la structure de tâches de technique de commutation sont transférées après des sections définies de procédures de commutation, sous la forme de signalisations d'un protocole de signalisation spécifique à la technique de commutation, au module de programme d'acquisition de données de service (TR COL).

14. Système de communication suivant la revendication 9, caractérisé par le fait qu'un ordre technique de service est exécuté moyennant des entrées effectuées dans le terminal technique de service (T), qu'après réception des données d'entrée par le module de programme d'appareil (AMT) concernant la technique de service, associé au terminal technique de service (T) et après réception d'un critère d'émission transmis par l'intermédiaire d'un bus de transmission de programme (PDM) de la structure de bus de transmission de programme (PDM LDM), les données d'entrée sont retransmises, en étant structurées selon le protocole virtuel du terminal, par l'intermédiaire du bus de transmission de programme (PDM), au module de programme de coordonnées (SES CON), qui transmet les données d'entrée au module de programme de processeur de textes (MMI) pour contrôler quel module de programme d'application (AMA) est nécessaire pour la poursuite du traitement, et envoie une signalisation, qui dépend du résultat de ce contrôle, au module de programme de liaison d'application (CNC CON), au sens de la demande des tableaux spécifiques à l'application est nécessaire pour le traitement de l'ordre.

15. Système de communication suivant la revendication 14, caractérisé en ce que le module de programme de coordination (SES CON) reçoit les données d'ordre converties par le module de programmes de processeur de textes (MMI) et envoie ces données, par l'intermédiaire d'une liaison établie par le module de programmes de liaison d'application (CNC CON), au module sélectionné de programme d'application (AMA), qui, après exécution des procédures spécifiques à l'application, transfère le résultat de la procédure dans le protocole virtuel d'application au module de programme de coordination (SES CON).

16. Système de communication suivant la revendication 1, caractérisé par le fait que le module de programme de processeur de textes (MMI) est inséré dans un terminal technique de service réalisé de préférence sous la forme d'un ordinateur personnel et dans lequel sont mémorisés des tableaux de données, qui sont propres aux différentes applications et qui sont insérés au moyen d'un programme de système, structuré fonctionnellement de la même manière que le module de programme de coordination (SES CON) du terminal technique de service, dans l'élaboration d'ordre technique de service.

17. Système de communication suivant la revendication 16, caractérisé par le fait que le reste du trafic des données entre le terminal technique de service et le module de programme de coordination (SES CON), notamment pour le contrôle de paramètres typiques pour les ordres par rapport à la base de données (DB) s'effectue conformément au protocole virtuel d'application.

18. Système de communication suivant la revendication 1 à 17, caractérisé par le fait que respectivement seules des données modifiées par rapport à un état pris pour base d'une signalisation précédente sont transmises dans les signalisations, selon le protocole virtuel du terminal.

19. Système de communication suivant l'une des revendications 1 à 18, caractérisé par le fait que des signalisations sont établies dans le protocole virtuel de terminal et dans le protocole virtuel d'application de telle sorte qu'une partie d'en-tête des données du système comporte une partie d'en-tête de données, spécifique pour la technique de service, comprotant une information d'identification de protocole différente pour les deux protocoles, une désignation d'une session d'ordres, dont fait partie la signalisation respective, et une adresse de destination désignant le module de programme d'application (AMA) nécessaire pour l'élaboration de la session d'ordres.

20. Système de communication suivant l'une des revendications 1 à 19, caractérisé par le fait que les modules de programmes d'appareils pour la technique de service (AMS, AMF), qui sont associés aux terminaux, et ceux qui sont associés aux terminaux techniques de service (T), possèdent un plan (Prepr) de programme de prétraitement, qui évalue des incitations délivrées par les appareils terminaux ou les terminaux techniques de service (T), selon des critères individuels de lignes et convertissent des signalisations provenant de la structure de tâches (LDU PD) liée à la technique de service en des données de réglage pour les terminaux ou les terminaux techniques de service (T), et un plan de programme d'évaluation (Interpr) qui convertit les incitations, au moyen de paramètres spécifiques au système, en des signalisations conformes au protocole.

21. Système de communication suivant la revendication 20, caractérisé par le fait qu'au moins l'un des modules (AMS) de programmes d'appareils de la technique de service, associé aux terminaux, représente un module partiel d'un module de programme d'appareils, qui sont spécifiques aux types de terminaux et possèdent un autre module partiel (VTS) pour le traitement d'incitation et de signalisations techniques de commutation, et qu'un programme d'association (Mess Assign), résidant dans le plan de programme d'évaluation (Interpr) réparti respectivement, sur la base de la fonction, des signalisations et des informations entre les deux modules partiels (AMS, VTS).

22. Système de communication suivant la revendication 21, caractérisé par le fait que le terminal, notamment un terminal téléphonique, possède un dispositif d'affichage alphanumérique, notamment un appareil d'affichage possédant une capacité d'affichage limitée par rapport à un appareil à écran d'affichage, et que le module partiel (AMS) associé à la technique de service est agencé de telle sorte que la retransmission de textes, qui doivent être affichés dans le dispositif d'affichage alphanumérique, s'effectue zone par zone avec une taille de zone adaptée à la capacité d'affichage.

23. Système de communication suivant l'une des revendications 1 à 22, caractérisé par le fait qu'une mémoire périphérique (DP-RAM) gérée par un processeur d'entrée/sortie (OP) possède des bornes d'entrée respectives commandables indépendamment les unes des autres, pour les signalisations obtenues dans la tâche de la technique des lignes (DH), pour les terminaux ou les terminaux techniques de service (T) et une borne de sortie pour des signalisations obtenues à partir d'incitations des terminaux ou des terminaux techniques de service (T).

24. Système de communication suivant la revendication 23, caractérisé par le fait qu'une mémoire de transfert respective (Mlb-In; Mlb-Out), fonctionnant à la manière d'une boîte à lettres, est associée aussi bien à la borne d'entrée qu'à la borne de sortie.

**25.** Système de communication suivant la revendication 24, caractérisé par le fait que les modules de programmes d'appareils de la technique de service (AMT,AMS) sont combinés à la tâche de la technique des lignes (DH) comportant la mémoire de transfert (Mlb-Out) pour les signalisations devant être envoyées aux terminaux ou aux terminaux techniques de service (T).

**26.** Système de communication suivant les revendications 24 ou 25, caractérisé par le fait que la retransmission des incitations ou informations, déclenchées par les terminaux (S) ou les terminaux techniques de service (T), depuis la mémoire de transfert associée (Mlb-In) à la mémoire d'entrée et à la mémoire de sortie (Mlb-DH) de la tâche de la technique des lignes (DH) et/ou des modules de programmes d'appareils (AMT,AMS), à la mémoire de transfert (Mlb-Out) pour les signalisations devant être envoyées aux terminaux ou aux terminaux techniques de service (T), s'effectue dans une section de transport d'un protocole de signalisation du système de service multitâches.

**27.** Système de communication suivant l'une des revendications 23 à 26, caractérisé par le fait que le processeur d'entrée/sortie (IOP) est équipé d'un système de service identique au système de service multitâches.

**28.** Système de communication suivant la revendication 1, caractérisé par le fait que respectivement au moins une mémoire d'entrée et de sortie (Mlb-DH, Mlb-LDU PD), fonctionnant à la manière d'une boîte à lettres, est associée à la structure de tâches de la technique des lignes (DH), à la structure de tâches de coordination (LDU PD) de la technique de service et à la structure de tâches d'application (LDU VD) de la technique de service.

FIG 1

# FIG 2

# FIG 3

EP 0 303 869 B1

FIG 4

# FIG 5a

| AMT | AM-LP | SES CON | CNC CON | MMI | AMA | EX |
|-----|-------|---------|---------|-----|-----|-----|

LOGON

LOGON ACK

WRTRD    ***    E1

WRITE

WRITE

WRT ACK

WRTRD

E2

WRTRD

WRTRD

DATA    E3

PARS

E4

LOAD TBLS

LOAD TBLS

LOAD ACK

# FIG 5b

EP 0 303 869 B1

# FIG 5c

29

EP 0 303 869 B1

# FIG 5d

| AMT | AM-LP | SES CON | CNC CON | MMI | AMA | EX |
|---|---|---|---|---|---|---|

RES ACK — E 17

WRITE

WRITE

WRITE

WRITE

WRT ACK

WRT ACK

REL DEV — E 18

END WRT — E 19

END WRT

WRITE

REL TBLS

REL ACK

REL AMA

REL ACK

30

# FIG 5e

| AMT | AM-LP | SES CON | CNC CON | MMI | AMA | EX |
|-----|-------|---------|---------|-----|-----|-----|

E20

WRITE

WRT
ACK

***